# EUROPEAN PATENT APPLICATION

(11) **EP 4 435 698 A1**
(43) Date of publication of application: **25.09.2024**
(21) Application number: 24161307.4
(22) Date of filing: 05.03.2024
(51) Int. Cl.: G06Q 10/20

(54) **INFORMATION PROCESSING SYSTEM, MAINTENANCE SCHEDULE DISPLAY CONTROL METHOD, MAINTENANCE MANAGEMENT SYSTEM, AND CARRIER MEANS**

(30) Priority: 20.03.2023 JP 2023044059; 29.11.2023 JP 2023201796
(71) Applicant: Ricoh Company, Ltd., Tokyo 143-8555 (JP)
(72) Inventor: MATSUE, Natsumi, Tokyo, 143-8555 (JP); YAMAMURA, Hiroki, Tokyo, 143-8555 (JP)
(74) Representative: SSM Sandmair

(57) **Abstract**

An information processing system for determining a maintenance schedule for first maintenance and a maintenance schedule for second maintenance, the second maintenance being different from the first maintenance and being to be executed additionally, includes a display control unit (42). The display control unit (42) controls display means to display, in response to determination of a maintenance schedule for the second maintenance, information related to accelerated execution of the maintenance schedule for the first maintenance, based on the maintenance schedule for the second maintenance.

## Description

### BACKGROUND

### Technical Field

Embodiments of the present disclosure relate to an information processing system, a maintenance schedule display control method, a maintenance management system, and carrier means.

### Related Art

In devices such as image forming apparatuses, components such as motors and clutches perform mechanical work to print with color materials, and the devices may undergo various kinds of maintenance activities (first maintenance) such as cleaning and replacement of parts. For example, a large image forming apparatus such as a commercial printer undergoes various maintenance activities. Some maintenance activities are performed manually by, for example, a user on the image forming apparatus. Other maintenance activities are performed by an administrator changing values set in the image forming apparatus by using a terminal apparatus, for example.

A technique for efficient execution of maintenance is known (see, for example, Japanese Unexamined Patent Application Publication No. 2017-049940). Japanese Unexamined Patent Application Publication No. 2017-049940 discloses a system for efficiently executing maintenance work by updating a planned maintenance schedule upon detection of a sign of failure in a device, compared to a system for executing temporary maintenance work immediately upon detection of a sign of failure in a device.

However, the technique of the related art has a drawback that the technique of the related art gives users a little room to decide when to execute temporarily added maintenance (second maintenance). For example, as in the system disclosed in Japanese Unexamined Patent Application Publication No. 2017-049940, a planned maintenance schedule is updated such that temporary maintenance is performed at a time when regular maintenance is performed to enhance the efficiency of the maintenance work. However, a user of the device, which is usually used for production work such as printing of printed materials, desires to have maintenance performed on the device at a time when the production work is not interfered with. If additional maintenance other than pre-scheduled regular maintenance whose content is also determined in advance is added to a planned maintenance schedule without taking into account the production work, the production work performed by the user may be delayed.

In some cases such as when the deadline for printed materials is approaching and the user wishes to continue printing of the printed materials without stopping the device, it is likely that the user does not have the additional maintenance performed on the device. In the technique of the related art described above, additional maintenance is scheduled in consideration of a planned regular maintenance schedule. However, there is no choice not to execute the additional maintenance, and the technique of the related art does not allow the user of the device to select whether to execute the additional maintenance.

### SUMMARY

In view of the above situation, an object of an embodiment of the present disclosure is to provide a technique for proposing accelerated execution of the first maintenance to a user.

According to an embodiment of the present disclosure, an information processing system for determining a maintenance schedule for first maintenance and a maintenance schedule for second maintenance, the second maintenance being different from the first maintenance and being to be executed additionally, includes a display control unit. The display control unit controls display means to display, in response to determination of a maintenance schedule for the second maintenance, information related to accelerated execution of the maintenance schedule for the first maintenance, based on the maintenance schedule for the second maintenance.

According to an embodiment of the present disclosure, a maintenance schedule display control method for determining a maintenance schedule for first maintenance and a maintenance schedule for second maintenance, the second maintenance being different from the first maintenance and being to be executed additionally, includes controlling display means to display, in response to determination of a maintenance schedule for the second maintenance, information related to accelerated execution of the maintenance schedule for the first maintenance, based on the maintenance schedule for the second maintenance.

According to an embodiment of the present disclosure, a maintenance management system for determining a maintenance schedule for first maintenance and a maintenance schedule for second maintenance, the second maintenance being different from the first maintenance and being to be executed additionally, includes a display control unit. The display control unit controls display means to display, in response to determination of a maintenance schedule for the second maintenance, information related to accelerated execution of the maintenance schedule for the first maintenance, based on the maintenance schedule for the second maintenance.

According to an embodiment of the present disclosure, an information processing system for determining a maintenance schedule for first maintenance and a maintenance schedule for second maintenance having a lower priority of execution than the first maintenance, includes a communication unit. The communication unit, in response to determination of a maintenance schedule for the second maintenance, transmits information related to accelerated execution of the maintenance schedule for the first maintenance to a device, based on the maintenance schedule for the second maintenance. The device displays, on display means, the information related to accelerated execution of the maintenance schedule for the first maintenance.

According to an embodiment of the present disclosure, carrier means carry computer readable codes which, when executed by an information processing apparatus for determining a maintenance schedule for first maintenance and a maintenance schedule for second maintenance, the second maintenance being different from the first maintenance and being to be executed additionally, cause the information processing apparatus to carry out a maintenance schedule display control method. The maintenance schedule display control method includes controlling display means to display, in response to determination of a maintenance schedule for the second maintenance, information related to accelerated execution of the maintenance schedule for the first maintenance, based on the maintenance schedule for the second maintenance.

According to an embodiment of the present invention, a technology of proposing accelerated execution of the first maintenance to a user is provided.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is an illustration of an example of an accelerated execution proposal screen displayed by an image forming apparatus, according to an embodiment of the present disclosure to propose accelerated execution of regular maintenance;
FIG. 2 is a schematic diagram illustrating an example system configuration of a maintenance management system, according to an embodiment of the present disclosure;
FIG. 3 is a block diagram illustrating an example hardware configuration of a digital front end (DFE), according to an embodiment of the present disclosure;
FIG. 4 is a schematic diagram illustrating an example configuration of the image forming apparatus, according to an embodiment of the present disclosure;
FIG. 5 is a schematic diagram illustrating a modification of the configuration of the image forming apparatus, according to an embodiment of the present disclosure;
FIG. 6 is a block diagram illustrating an example hardware configuration of a computer, according to an embodiment of the present disclosure;
FIG. 7 is a block diagram illustrating an example functional configuration of a server apparatus, a terminal apparatus, and the image forming apparatus, according to an embodiment of the present disclosure;
FIG. 8 is a table illustrating an example of device status information stored in a device status information storage unit, according to an embodiment of the present disclosure;
FIG. 9 is a table illustrating an example of device management information stored in a device management information storage unit, according to an embodiment of the present disclosure;
FIG. 10 is a table illustrating an example of failure maintenance information stored in a failure maintenance information storage unit, according to an embodiment of the present disclosure;
FIGs. 11A, 11B, and 11C are tables illustrating an example of additional maintenance information, regular maintenance information, and maintenance information stored in a maintenance information storage unit, respectively, according to an embodiment of the present disclosure;
FIG. 12 is a table illustrating an example of notification history information stored in a notification history information storage unit, according to an embodiment of the present disclosure;
FIG. 13 is an illustration of an example of a monthly maintenance schedule screen, according to an embodiment of the present disclosure;
FIG. 14 is an illustration of an example of a weekly maintenance schedule screen, according to an embodiment of the present disclosure;
FIG. 15 is a flowchart illustrating an example of a process in which a determination unit determines whether to recommend an accelerated execution of maintenance, according to an embodiment of the present disclosure;
FIG. 16 is an illustration of an example of an accelerated execution proposal screen for proposing accelerated execution of regular maintenance to provide a recommendation for an accelerated execution of regular maintenance, according to an embodiment of the present disclosure;
FIG. 17A is an illustration of an example of a warning screen, according to an embodiment of the present disclosure;
FIG. 17B is an illustration of an example of a maintenance screen, according to an embodiment of the present disclosure;
FIG. 18A is an illustration of an example of a guidance screen, according to an embodiment of the present disclosure;
FIG. 18B is an illustration of an example map of a print factory in which the image forming apparatus is installed, according to an embodiment of the present disclosure;
FIG. 18C is a chart illustrating an example of performance information displayed by the image forming apparatus after the completion of maintenance, according to an embodiment of the present disclosure;
FIGs. 19A, 19B, 19C, and 19D are a view of an augmented reality (AR) headset and schematic illustrations of maintenance work carried out using the AR headset according to an embodiment of the present disclosure;
FIG. 20 is a flowchart illustrating an example of a process for updating the notification history information stored in the notification history information storage unit, according to an embodiment of the present disclosure;
FIG. 21 is a flowchart illustrating an example of a process for changing whether to recommend accelerated execution of maintenance, based on whether the user has performed maintenance for which the accelerated execution is recommended, according to an embodiment of the present disclosure;
FIGs. 22A and 22B are illustrations of an example of maintenance schedule screens displayed before and after execution of maintenance, according to an embodiment of the present disclosure;
FIG. 23 is a sequence diagram illustrating an example of a process in which the image forming apparatus and the server apparatus communicate with each other and the image forming apparatus displays an accelerated execution proposal screen and a maintenance schedule screen, according to an embodiment of the present disclosure;
FIG. 24 is a schematic entire view of a liquid discharge apparatus, according to an embodiment of the present disclosure;
FIG. 25 is a schematic diagram illustrating an example hardware configuration of a three-dimensional (3D) printer, according to an embodiment of the present disclosure; and
FIG. 26 is an illustration of an example of a progress status screen displayed on a display that a control device includes, according to an embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A maintenance management system and a maintenance schedule display control method performed by the maintenance management system according to embodiments of the present disclosure will be described hereinafter.

### Overview of Display of Additional Maintenance

Maintenance of an image forming apparatus includes diverse activities including simple activities such as cleaning of a scan surface of a scanner and professional activities such as voltage adjustment for a charging device. As known in the art, a customer engineer typically visits a customer location to perform maintenance of a device at the customer location. In an attempt, low-workload activities of maintenance are performed by a user (an end user or an administrator) at the customer location to keep the device in good condition without interfering with the printing operation on the site.

Accordingly, the user performs production of printed materials, which is a daily task, and performs an extra task, namely, regular maintenance (an example of first maintenance). In addition, the user also temporarily performs additional maintenance (an example of second maintenance) of a failure. A sign of the failure is detectable by a server apparatus described below in advance by applying device status information transmitted from the image forming apparatus to a prediction model. Accordingly, it is desirable for the user to efficiently perform the regular maintenance and the additional maintenance without interfering with the production of printed materials.

In the present embodiment, additional maintenance for handling a failure upon detection of a sign of the failure is determined. Specifically, the image forming apparatus displays the acceleration of the execution of, among the activities of regular maintenance, an activity that is the same as or similar to an activity of additional maintenance to recommend the user to perform an accelerated execution of the activity of regular maintenance.

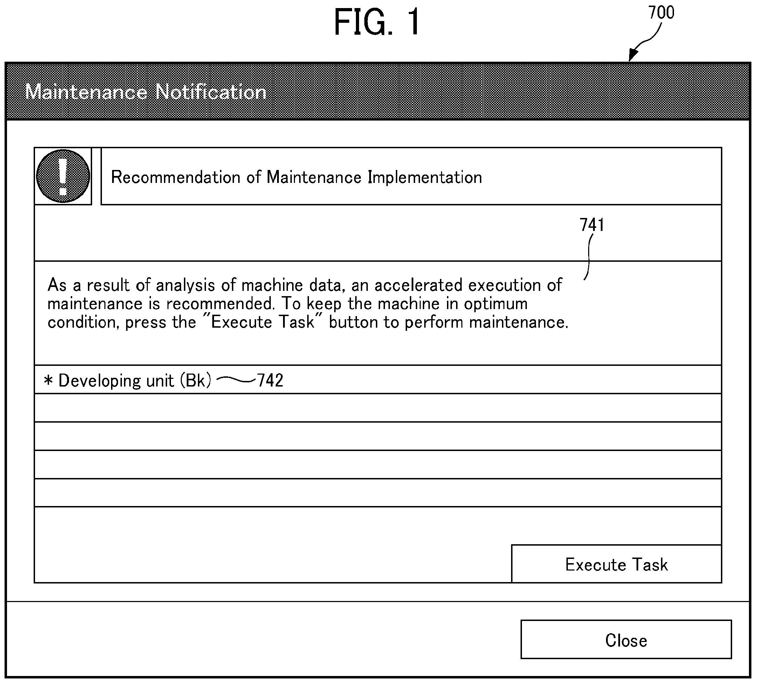

FIG. 1 illustrates an example of an accelerated execution proposal screen 700 displayed by the image forming apparatus to propose an accelerated execution of regular maintenance. As illustrated in FIG. 1, the accelerated execution proposal screen 700 displays a message 741 indicating "As a result of analysis of machine data, an accelerated execution of maintenance is recommended. To keep the machine in optimum condition, press the "Execute Task" button to perform maintenance." The accelerated execution proposal screen 700 further displays a maintenance-target module 742. The message 741 and the maintenance-target module 742 are examples of information related to an accelerated execution.

As described above, the maintenance management system provides a recommendation for the accelerated execution of pre-scheduled regular maintenance. If additional maintenance is added, the regular maintenance for which the accelerated execution is recommended is performed, thereby making the additional maintenance complete. Accordingly, the additional maintenance is not additionally executed. As a result, the production of printed materials is less likely to be interfered with. For example, when the deadline for printed materials is approaching and the user wishes to continue printing of the printed materials without stopping the device, the additional maintenance is not additionally executed. Thus, for example, the schedule for the production of printed materials is adjusted to perform the regular maintenance for which the accelerated execution is recommended.

### Terms

The term "maintenance" refers to a set of activities performed to ensure the continuous operation of expected functions of a device and is used to indicate maintenance, management, repair, or work to be performed for maintenance, management, or repair. The maintenance is not limited to remedies of failures.

The device may be any machine or structure to be subjected to maintenance. In the present embodiment, the image forming apparatus is an example of the device. In one example, the image forming apparatus prints on a sheet of paper. In another example, the image forming apparatus is a three-dimensional (3D) printer or a printer for apparel products.

The term "maintenance schedule" refers to information on planned maintenance activities registered in a calendar or a timetable, for example.

The term "sign of failure" refers to a symptom or a harbinger of failure that is about to occur. A failure may have already occurred at the time of detection of a sign of the failure.

The term "user" refers to a person who performs printing using an image forming apparatus or performs maintenance on the image forming apparatus. The user may be an administrator in a company or may be a general user. In contrast, a service engineer and a customer engineer are persons external to the company of the user.

The term "maintenance priority" refers to the degree to which maintenance is prioritized, and may also be referred to as severity. Regular maintenance is maintenance performed regularly or periodically at specified intervals, and has a higher priority than additional maintenance. The additional maintenance has a lower priority than the regular maintenance. The additional maintenance and the regular maintenance will be described as different maintenance strategies, but may actually involve the same activities.

The term "acceleration" or "accelerated" refers to expediting the schedule of an event planned to be implemented in the near future in accordance with the situation. In the present embodiment, acceleration means that regular maintenance is performed on a date (or at a time) before the scheduled date (or time). The information related to an accelerated execution is also information to recommend the acceleration of execution or information indicating that execution can be accelerated. An accelerated execution is performed to execute a process for automatically rescheduling planned regular maintenance. Specifically, the predetermined date of execution (scheduled date) of the regular maintenance is put forward in accordance with the date of execution (scheduled date) of additional maintenance that is added. For example, the regular maintenance is set simultaneously with the additional maintenance, the regular maintenance and the additional maintenance are combined together, the additional maintenance is replaced with the regular maintenance, or the schedule of the regular maintenance is canceled. The automatic rescheduling of the regular maintenance may be performed by using a calculation equation. Specifically, the number of days by which the maintenance is to be accelerated or moved forward or the time to which the maintenance is to be accelerated or moved forward is registered in advance in combination with each maintenance item or the operation status and is reflected in the schedule when meeting a condition. Alternatively, an automatic update of the schedule may be scheduled by AI.

### Example System Configuration

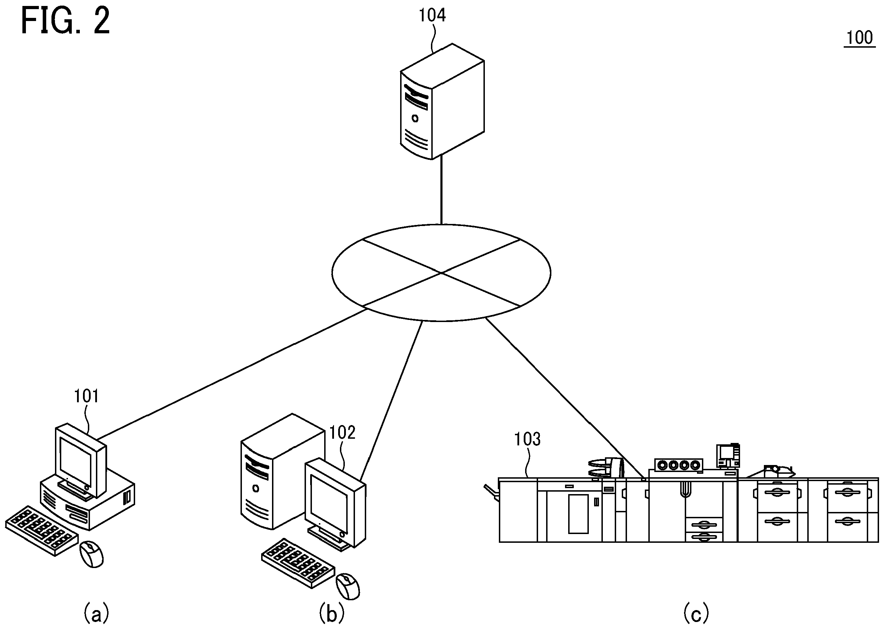

FIG. 2 illustrates an example system configuration of a maintenance management system 100 according to the present embodiment. The maintenance management system 100 includes a server apparatus 104, a digital front end (DFE) 102, and an image forming apparatus 103. In one embodiment, the maintenance management system 100 includes a terminal apparatus 101. In another embodiment, the maintenance management system 100 does not include the terminal apparatus 101.

The terminal apparatus 101 and the DFE 102 can communicate with each other via a network. The network includes, for example, a local area network (LAN) in a facility where the image forming apparatus 103 is installed, and further includes the Internet when the DFE 102 is located on the Internet. In one embodiment, the DFE 102 and the image forming apparatus 103 are connected one to-one via a dedicated line. In another embodiment, the DFE 102 and the image forming apparatus 103 are connected via a network. In one embodiment, the DFE 102 and the image forming apparatus 103 are integrated into a single unit. In another embodiment, the DFE 102 and the image forming apparatus 103 are detachable from each other.

A web browser operates in the terminal apparatus 101. The web browser accesses a server that the DFE 102 includes, and displays respective input operation screens for task creation, schedule registration, and task execution. The terminal apparatus 101 receives operations such as task creation, schedule registration, and task execution on an input operation screens from the administrator and requests the DFE 102 to perform the received operations.

The administrator inputs a user identifier (ID) and a password to the terminal apparatus 101 to log in to the DFE 102. The terminal apparatus 101 transmits the user ID and the password to the DFE 102. Accordingly, when the authentication by the DFE 102 is successful, the user of the terminal apparatus 101 is identified as a general user or an administrator.

A screen to be displayed or items to be input may vary depending on the general user or the administrator. The authentication of the administrator may be performed by an authentication server.

When the authentication is successful and the administrator logs in, the administrator is given access to task creation, schedule registration, and task execution. If the authentication is successful and the general user logs in, the general user is given access to task execution.

Examples of the terminal apparatus 101 include a personal computer (PC), a smartphone, a tablet terminal, a personal digital assistant (PDA), and a wearable PC such as smart glasses and a smart watch. The terminal apparatus 101 may be any apparatus having a communication function, with a web browser or application software dedicated to the DFE 102 running on the apparatus. In one embodiment, the terminal apparatus 101 is, for example, a car navigation system, a game console, or a television receiver.

In one embodiment, a web browser is also operating on the image forming apparatus 103. In this case, the administrator operates the image forming apparatus 103 and requests the DFE 102 to perform task creation, schedule registration, and task execution.

In another embodiment, the DFE 102 displays the input operation screen on a display for a console and receives processing for task creation, schedule registration, and task execution from a keyboard. In this case, the terminal apparatus 101 is omitted from the maintenance management system 100.

The DFE 102 is a control device that performs operations such as receiving a print job to be executed by the image forming apparatus 103, performing image processing (with a raster image processor or RIP), managing progress during the execution of the print job, and monitoring abnormalities. The DFE 102 receives processing for task creation, schedule registration, and task execution from the terminal apparatus 101. Specifically, the DFE 102 provides the administrator with a user interface (input operation screen) for operating the image forming apparatus 103. The DFE 102 includes one or more information processing devices.

The DFE 102 generates screen information of a screen to be displayed by the web browser. The screen information is a program described in, for example, hypertext markup language (HTML), extensible markup language (XML), script language, and cascading style sheet (CSS) formats. The structure of a web page is specified by HTML, the operation of the web page is specified by the script language, and the style of the web page is specified by CSS. Further, an application program implemented in cooperation of the screen information on the client side and an application program or a database on the server side is referred to as a web application program. In the present embodiment, the terminal apparatus 101 and the DFE 102 cooperate with each other to execute the web application program.

In response to a request from the terminal apparatus 101 or the image forming apparatus 103, the DFE 102 performs processing of registering a task or a task schedule in a database and processing of executing a task on the image forming apparatus 103, such as changing device settings and requesting the image forming apparatus 103 to perform an operation.

The image forming apparatus 103 executes a print job in response to a request received from the DFE 102. The image forming apparatus 103 has a function of printing an image on a sheet of paper. Examples of a method for forming an image include laser printing, inkjet printing, thermal printing, screen printing, and intaglio printing. The image forming apparatus 103 may further have a function of a multifunction peripheral (multifunction printer) or a multi-function peripheral/product/printer (MFP). In one example, the image forming apparatus 103 may be referred to as a printer or a printing apparatus. In another embodiment, the image forming apparatus 103 is, for example, a 3D printer or a direct to garment (DTG) printer.

The image forming apparatus 103 according to the present embodiment may be a commercial printer. The commercial printer is not a device for printing of printed materials for internal use by, for example, an employee of a company, but a device for commercial printing, which is printing of printed materials for businesses. In the commercial printing, the image forming apparatus 103 outputs printed materials to be used for business activities of general companies and organizations. Examples of the printed materials to be output include leaflets, brochures, posters, catalogs, company brochures, and manuals. An image forming apparatus for office use and an image forming apparatus for commercial use typically have different printing speeds and image quality settings and support different types and sizes of paper, for example.

The present embodiment is applicable to apparatuses other than the image forming apparatus 103. The apparatuses other than the image forming apparatus 103 include, for example, a projector (PJ), an electronic whiteboard, a videoconference terminal, a digital signage, a head-up display (HUD) device, an industrial machine, an image capturing device, a sound collecting device, a medical device, a networked home appliance, and a game console.

The server apparatus 104 includes one or more information processing devices that execute processing relating to maintenance. A system including multiple information processing devices is referred to as an information processing system. Specifically, the server apparatus 104 receives device status information from the image forming apparatus 103, determines the presence or absence of a sign of failure, and determines a recommended execution time period for additional maintenance.

The server apparatus 104 resides either in a cloud environment or an on-premises environment. The term "cloud" refers to a mode of use of information processing in which resources on a network, rather than specific hardware resources, are used. The term "on-premises" typically refers to a method of operating a system such as a server or software installed in the premises of a facility that can be managed by a person in charge on a user side.

In one example, the server apparatus 104 is independent as illustrated in FIG. 2. In another example, the server apparatus 104 and the DFE 102 are integrated into a single unit. In one embodiment, the image forming apparatus 103 may have a function of the server apparatus 104.

### Hardware Configuration

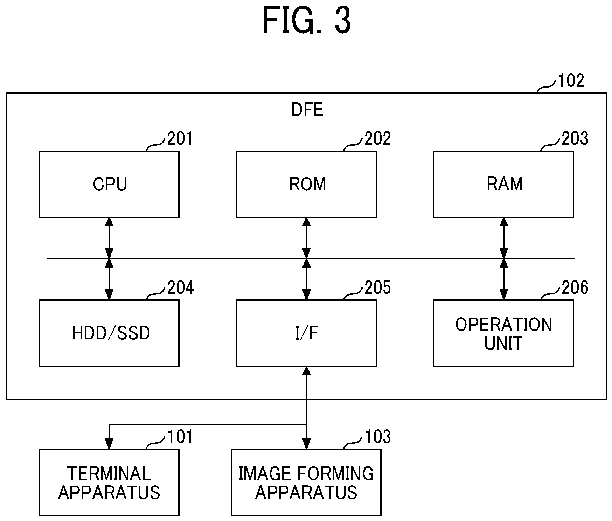

The hardware configuration of the DFE 102, the image forming apparatus 103, and the server apparatus 104 will be described with reference to FIGs. 3 to 6.

### DFE

FIG. 3 is a block diagram illustrating an example hardware configuration of the DFE 102. The DFE 102 has a configuration similar to the configuration of a computer. The DFE 102 includes a central processing unit (CPU) 201, a read-only memory (ROM) 202, a random-access memory (RAM) 203, a hard disk drive (HDD)/solid-state drive (SSD) 204, an interface (I/F) 205, and an operation unit 206.

The CPU 201 uses the RAM 203 as a work area and executes a program stored in the ROM 202.

The HDD/SSD 204 is used as a storage unit and stores information on a task and a schedule. The information stored in the HDD/SSD 204 may be used by the CPU 201 when the CPU 201 executes a read program.

The I/F 205 is an interface via which the DFE 102 can communicate with the image forming apparatus 103 and the terminal apparatus 101.

The operation unit 206 includes a touch panel and displays, for example, the status of the image forming apparatus 103, a task schedule, and task details on a screen. Further, the operation unit 206 receives an input from a user (an administrator or a general user) who executes a task or an administrator who creates a task or registers a schedule.

### Image Forming Apparatus

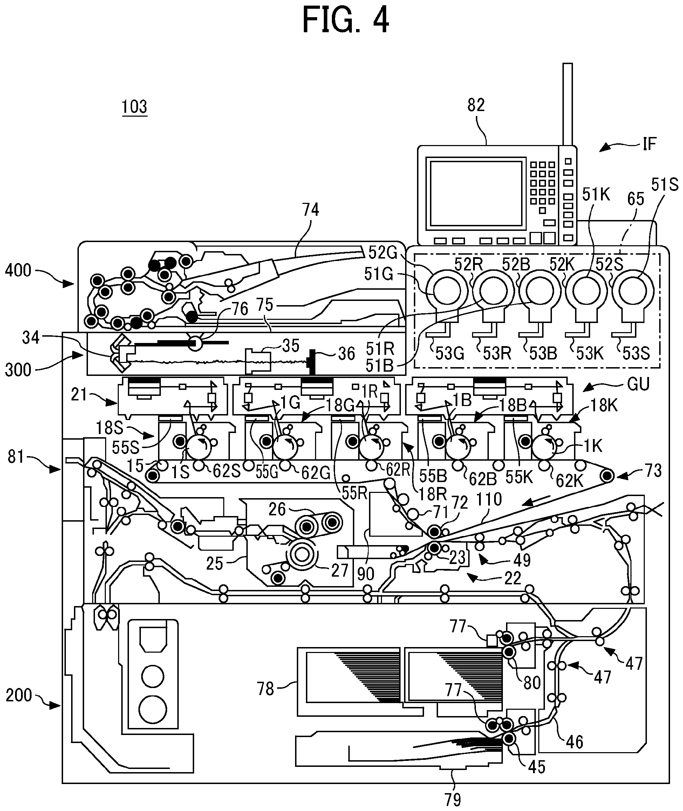

FIG. 4 is a schematic diagram illustrating an example configuration of the image forming apparatus 103 according to the present embodiment. The image forming apparatus 103 is an electrophotographic image forming apparatus and includes, for example, a printer 81, a feeder 200, a scanner 300, and an automatic document feeder 400. The image forming apparatus 103 according to an embodiment of the present disclosure may be any printing apparatus having a print function for printing and outputting a printed material. The image forming apparatus 103 may include one or more of the printer 81, the feeder 200, the scanner 300, and the automatic document feeder 400, and is not limited by terminology.

The printer 81 includes an image forming unit GU including five developing stations 18S, 18G, 18R, 18B, and 18K that form images of colors of special color (S), invisible green (G), invisible red (R), invisible blue (B), and black (key plate or K), respectively. Suffixes S, G, R, B, and K are assigned to reference numerals (18) of components to represent members used for the special color, the invisible green color, the invisible red color, the invisible blue color, and the black color, respectively. The same applies to other reference numerals used in the following description. In the following description, furthermore, the letters S, G, R, B, and K may indicate the special color, the invisible green color, the invisible red color, the invisible blue color, and the black color, respectively. The special color is a general term of colors different from any of the invisible green color, the invisible red color, the invisible blue color, and the black color.

The invisible green color refers to a green color that is visually recognizable under invisible light but is difficult to visually recognize under visible light. The invisible red color refers to a red color that is visually recognizable under invisible light but is difficult to visually recognize under visible light. The invisible blue color refers to a blue color that is visually recognizable under invisible light but is difficult to visually recognize under visible light. The printer 81 superimposes the invisible green color, the invisible red color, and the invisible blue color on top of one another to express a desired invisible color (i.e., a color that is visually recognizable under invisible light but is difficult to visually recognize under visible light). The black color refers to a black color that is visually recognizable under visible light. The special color refers to a special color that is visually recognizable under visible light.

Visible light is electromagnetic radiation having a wavelength that is perceived as light by the human eye. Invisible light is electromagnetic radiation having a wavelength other than the wavelength of visible light. In the present embodiment, invisible light is long-wavelength ultraviolet light emitted by, for example, a black light. In the present embodiment, furthermore, the invisible color is transparent under visible light such as light emitted by a fluorescent lamp and sunlight, and is visually recognizable under invisible light such as ultraviolet light emitted by a black light.

Specifically, an image of the invisible green color is implemented by invisible green toner (hereinafter referred to as "G toner"), an image of the invisible red color is implemented by invisible red toner (hereinafter referred to as "R toner"), and an image of the invisible blue color is implemented by invisible blue toner (hereinafter referred to as "B toner"). An image of an invisible color other than the invisible green color, the invisible red color, and the invisible blue color is implemented by superimposing at least two invisible color toners of the G toner, the R toner, and the B toner on top of each other. Invisible black color that is a black color visually recognizable under invisible light is implemented by causing none of the G toner, the R toner, and the B toner to adhere. An image of the special color that is visually recognizable under visible light is implemented by special-color toner (hereinafter referred to as "S toner"). An image of the black color that is visually recognizable under visible light is implemented by black toner (hereinafter referred to as "K toner").

In the present embodiment, the invisible color toner is produced by combining transparent toner (clear toner) and a transparent phosphor. In other words, the invisible color toner is typically produced using clear toner as a base. The transparent phosphor is, for example, a transparent fluorescent pigment or a transparent fluorescent dye. In the present embodiment, furthermore, the invisible color toner is pulverization toner having a fixing temperature higher than the fixing temperature of polymerization toner. In one embodiment, the invisible color toner may be polymerization toner.

A housing of the printer 81 includes, in addition to the developing stations 18S, 18G, 18R, 18B, and 18K, an optical writing device 21, an intermediate transfer device 73, a secondary transfer device 22, a registration roller pair 49, and a fixing device 25 having a belt fixing system, for example.

The optical writing device 21 includes, for example, a light source, a polygon mirror, an f-0 lens, and a reflection mirror, and irradiates the surfaces of photoconductors 1S, 1G, 1R, 1B, and 1K with laser beams based on image data.

The developing stations 18S, 18G, 18R, 18B, and 18K include, in addition to the photoconductors 1S, 1G, 1R, 1B, and 1K having a drum shape, a charging roller (charging means), a developing device (developing means), a drum cleaning device, and a discharge lamp (discharging means), for example.

In the developing station 18S for S (special color), the surface of the photoconductor 1S is uniformly charged by the charging roller serving as charging means. The charged surface of the photoconductor 1S is irradiated with a laser beam, which is modulated and deflected, by the optical writing device 21. As a result, the potential of an irradiated portion (exposed portion) decays. The decay allows an electrostatic latent image for S to be formed on the surface of the photoconductor 1S. The formed electrostatic latent image for S is developed by the developing device serving as developing means into an S toner image.

The S toner image formed on the photoconductor 1S for S is primarily transferred onto an intermediate transfer belt 110. After the S toner image is primarily transferred, residual toner remains on the surface of the photoconductor 1S, and the drum cleaning device removes the residual toner to clean the surface of the photoconductor 1S.

In the developing station 18S for S, the surface of the photoconductor 1S cleaned by the drum cleaning device is subjected to charge removal by a charge remover. Then, the surface of the photoconductor 1S is uniformly charged by a charger and returns to the initial state. The sequence of processes described above is also performed on the developing stations 18G, 18R, 18B, and 18K for the other colors (G, R, B, and K) in a similar manner.

The intermediate transfer device 73 includes, for example, the intermediate transfer belt 110, which is formed into an endless loop, and a belt cleaner 90. The intermediate transfer device 73 also includes, for example, a drive roller 71, a secondary transfer backup roller 72, and four primary transfer bias rollers 62S, 62G, 62R, 62B, and 62K.

The intermediate transfer belt 110 formed into an endless loop is stretched over multiple tension rollers such as the drive roller 71 disposed inside the loop. The intermediate transfer belt 110 is endlessly moved in the clockwise direction in FIG. 4 by the rotation of the drive roller 71 driven by a belt drive motor.

The primary transfer bias rollers 62S, 62G, 62R, 62B, and 62K for S, G, R, B, and K are disposed so as to come into contact with the back surface (inner circumferential surface) of the intermediate transfer belt 110, and a primary transfer bias output from a power supply is applied to each of the primary transfer bias rollers 62S, 62G, 62R, 62B, and 62K. Further, the intermediate transfer belt 110 is pressed against the photoconductors 1S, 1G, 1R, 1B, and 1K from the back surface of the intermediate transfer belt 110. As a result, primary transfer nips for S, G, R, B, and K are formed in contact portions between the photoconductors 1S, 1G, 1R, 1B, and 1K and the front surface (outer circumferential surface) of the intermediate transfer belt 110. In the primary transfer nips, the primary transfer bias generates primary transfer electric fields between the photoconductors 1S, 1G, 1R, 1B, and 1K and the primary transfer bias rollers 62S, 62G, 62R, 62B, and 62K.

The S toner image formed on the photoconductor 1S for S is primarily transferred onto the intermediate transfer belt 110 with the effects of the primary transfer electric field and the nip pressure. The G toner image, the R toner image, the B toner image, and the K toner image, which are formed on the photoconductors 1G, 1R, 1B, and 1K for G, R, B, and K, respectively, are sequentially superimposed on the S toner image and primarily transferred onto the S toner image. As a result of superimposition in the primary transfer process, a multicolor toner image is formed on the intermediate transfer belt 110.

The multicolor toner image formed on the intermediate transfer belt 110 is secondarily transferred onto a recording sheet at a secondary transfer nip described below. After the intermediate transfer belt 110 passes through the secondary transfer nip, residual toner remains on the surface of the intermediate transfer belt 110, and the belt cleaner 90 opposing the drive roller 71 with the intermediate transfer belt 110 therebetween removes the residual toner to clean the surface of the intermediate transfer belt 110.

The secondary transfer device 22 disposed below the intermediate transfer device 73 brings a secondary transfer roller 23 into contact with a portion of the intermediate transfer belt 110 that goes around the secondary transfer backup roller 72 to form the secondary transfer nip. A secondary transfer bias having the same polarity as the polarity of toner is applied to the secondary transfer backup roller 72. By contrast, the secondary transfer roller 23 is grounded. Accordingly, a secondary transfer electric field is formed at the secondary transfer nip to electrostatically move the multicolor toner image on the intermediate transfer belt 110 toward the secondary transfer roller 23 from the intermediate transfer belt 110. A recording sheet is forwarded to the secondary transfer nip by the registration roller pair 49 in synchronization with the multicolor toner image on the intermediate transfer belt 110, and the multicolor toner image is secondarily transferred on the recording sheet under the secondary transfer electric field or the nip pressure.

The feeder 200, which is located in a lower portion of the housing of the printer 81, includes a feed cassette 79 and a paper bank 78. The feed cassette 79 contains a plurality of recording sheets stacked in a sheet stack. The feed cassette 79 and the paper bank 78 each press a feed roller 77 against the uppermost recording sheet of the sheet stack. As the feed roller 77 rotates, the uppermost recording sheet is conveyed to a feeding path 46.

The feeding path 46, which receives the recording sheet fed from the feed cassette 79 or the paper bank 78, includes a plurality of conveyance roller pairs 47 and the registration roller pair 49 disposed at or around an end of the feeding path 46. Then, the recording sheet is conveyed toward the registration roller pair 49. The recording sheet conveyed toward the registration roller pair 49 is nipped between the rollers of the registration roller pair 49. On the other hand, in the intermediate transfer device 73, the multicolor toner image formed on the intermediate transfer belt 110 is conveyed to the secondary transfer nip as the intermediate transfer belt 110 rotates.

The registration roller pair 49 forwards the recording sheet nipped between the rollers thereof at a point in time when the recording sheet is brought into close contact with the multicolor toner image at the secondary transfer nip. As a result, at the secondary transfer nip, the multicolor toner image on the intermediate transfer belt 110 is brought into close contact with the recording sheet. The multicolor toner image is secondarily transferred onto the recording sheet, and a full-color image is formed on the recording sheet, which is white. The recording sheet on which the full-color image is formed in the way described above exits the secondary transfer nip as the secondary transfer roller 23 is driven to rotate, and is then sent to the fixing device 25 through a sheet conveyance unit including a conveyance belt.

The fixing device 25 includes a belt unit that rotates a fixing belt 26 while stretching the fixing belt 26 over two rollers, and a pressure roller 27 pressed against one of the two rollers of the belt unit. The fixing belt 26 and the pressure roller 27 come into contact with each other to form a fixing nip, and a recording sheet received from the sheet conveyance unit is nipped in the fixing nip. A fixing roller, which is one of the two rollers of the belt unit and is pressed by the pressure roller 27, includes a heat source (heater) inside to heat the fixing belt 26 by heat generation of the heat source. The heated fixing belt 26 heats the recording sheet nipped in the fixing nip. With the heat and the nip pressure, the full-color toner image is fixed on the recording sheet.

The recording sheet on which the fixing process is performed by the fixing device 25 is stacked on a stacking portion protruding from a left side plate of a housing of the image forming apparatus 103 or conveyed again to the secondary transfer nip for duplex printing.

To make copies of documents, for example, a bundle of sheet documents is placed on a document table 74 of the automatic document feeder 400. When the documents are side-stitched documents like a book bound on one side, the side-stitched documents are placed on an exposure glass 75. Before the side-stitched documents are placed on the exposure glass 75, the automatic document feeder 400 is opened with respect to the main body of the image forming apparatus 103, with the exposure glass 75 of the scanner 300 exposed. Subsequently, the automatic document feeder 400 is closed to press the side-stitched documents to open flat.

After the documents are placed in the manner described above, the scanner 300 starts a document reading operation in response to pressing of a copy start key. When a sheet document is placed on the automatic document feeder 400, however, the automatic document feeder 400 automatically feeds the sheet document to the exposure glass 75 before the document reading operation is started.

In the document reading operation, first, a first carrier 76 and a second carrier 34 start traveling, and light is emitted from a light source of the first carrier 76. Then, the light is reflected from the surface of the document, and is further reflected by a mirror disposed in the second carrier 34 to an imaging forming lens 35. After passing through the imaging forming lens 35, the light enters a reading sensor 36 as incident light. The reading sensor 36 forms image information according to the incident light.

In parallel with the document reading operation, components of the developing stations (18S, 18G, 18R, 18B, and 18K), the intermediate transfer device 73, the secondary transfer device 22, and the fixing device 25 start operating. The optical writing device 21 is driven and controlled based on the image information formed by the reading sensor 36, and the S, G, R, B, and K toner images are formed on the photoconductors 1S, 1G, 1R, 1B, and 1K, respectively. These toner images are superimposed on top of one another and transferred onto the intermediate transfer belt 110 to form a multicolor toner image.

Almost simultaneously with the start of the document reading operation, the feeder 200 starts a feeding operation. In the feeding operation, one of the feed rollers 77 is selectively rotated to feed the recording sheets from the paper bank 78 or the feed cassette 79. The recording sheets are separated one by one by a separation roller 80 and fed to a reverse feeding path, after which the fed recording sheet is conveyed toward the secondary transfer nip by the conveyance roller pairs 47.

In the housing of the printer 81, a controller including, for example, a CPU is disposed to control the devices. A control panel 82 including, for example, a liquid crystal display and various keys or buttons is disposed on the upper surface of the housing. An operator inputs a command on the control panel 82 to transmit the command to the controller to select, for example, a single-sided print mode for forming an image on one side of the recording sheet or a double-sided print mode for forming images on both sides of the recording sheet. Further, the image forming apparatus 103 displays, for example, a maintenance schedule on the control panel 82.

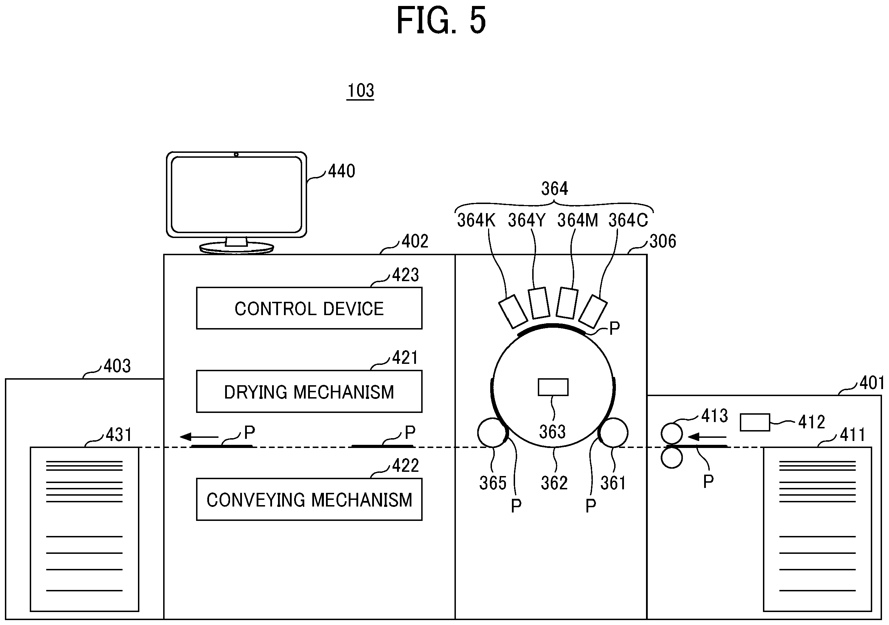

FIG. 5 illustrates a modification of the image forming apparatus 103. The image forming apparatus 103 illustrated in FIG. 5 is an inkjet image forming apparatus, for example. The image forming apparatus 103 includes a paper feed unit 401, an image forming unit 306, a drying unit 402, a paper ejection unit 403, and a control device 423. The image forming apparatus 103 forms, in the image forming unit 306, an image with ink, which is a liquid for image formation, on a sheet of paper P, which is a recording material serving as a sheet material fed from the paper feed unit 401. The image forming apparatus 103 dries the ink adhering to the sheet of paper P in the drying unit 402, and thereafter ejects the sheet of paper P from the paper ejection unit 403.

The paper feed unit 401 includes a paper feed tray 411, a feeder 412, and a registration roller pair 413. A plurality of sheets of paper P are stacked on the paper feed tray 411. The feeder 412 separates and feeds the sheets of paper one by one from the paper feed tray 411. The registration roller pair 413 feeds the sheet of paper to the image forming unit 306. The feeder 412 may be any feeder. In one example, the feeder 412 uses rollers. In another example, the feeder 412 uses air suction. After the leading edge of the sheet of paper P fed from the paper feed tray 411 by the feeder 412 reaches the registration roller pair 413, the registration roller pair 413 is driven at a predetermined time to feed the sheet of paper P to the image forming unit 306. In the present embodiment, the configuration of the paper feed unit 401 is not limited as long as the paper feed unit 401 feeds the sheet of paper P to the image forming unit 306.

The image forming unit 306 includes a receiving cylinder 361, a paper carrying drum 362, an ink ejection unit 364, and a transfer cylinder 365. The receiving cylinder 361 receives the fed sheet of paper P. The paper carrying drum 362 conveys the sheet of paper P conveyed by the receiving cylinder 361 while carrying the sheet of paper P on an outer circumferential surface of the paper carrying drum 362. The ink ejection unit 364 ejects ink toward the sheet of paper P carried by the paper carrying drum 362. The transfer cylinder 365 transfers the sheet of paper P conveyed by the paper carrying drum 362 to the drying unit 402. The sheet of paper P conveyed from the paper feed unit 401 to the image forming unit 306 is conveyed as the surface of the receiving cylinder 361 moves, with the leading edge thereof gripped by a paper gripper provided on the surface of the receiving cylinder 361. The sheet of paper P conveyed by the receiving cylinder 361 is delivered to the paper carrying drum 362 at a position facing the paper carrying drum 362.

A paper gripper is also provided on the surface of the paper carrying drum 362, and the leading edge of the sheet of paper P is gripped by the paper gripper. The paper carrying drum 362 has multiple suction holes dispersed on the surface thereof. In each suction hole, a suction airflow toward the inside of the paper carrying drum 362 is generated by a suction device 363. The sheet of paper P transferred from the receiving cylinder 361 to the paper carrying drum 362 is gripped by the paper gripper at the leading edge thereof, attracted to the surface of the paper carrying drum 362 by the suction airflow, and conveyed as the surface of the paper carrying drum 362 moves.

The ink ejection unit 364 according to the present embodiment is configured to eject four color inks of cyan (C), magenta (M), yellow (Y), and black (K) to form an image. The ink ejection unit 364 includes individual liquid discharge heads 364C, 364M, 364Y, and 364K for the respective inks. The liquid discharge heads 364C, 364M, 364Y, and 364K may have any configuration, without limitation, as long as the liquid discharge heads 364C, 364M, 364Y, and 364K discharge liquid. In one example, the image forming apparatus 103 may include a liquid discharge head for discharging a special ink such as white, gold, or silver as desired. In another example, the image forming apparatus 103 may include a liquid discharge head for discharging liquid that does not contribute to image formation, such as surface coating liquid.

The discharge operations of the liquid discharge heads 364C, 364M, 364Y, and 364K of the ink ejection unit 364 are controlled by driving signals corresponding to the image information. When the sheet of paper P carried on the paper carrying drum 362 passes through an area facing the ink ejection unit 364, the respective color inks are discharged from the liquid discharge heads 364C, 364M, 364Y, and 364K to form an image corresponding to the image information. In the present embodiment, the configuration of the image forming unit 306 is not limited as long as the image forming unit 306 applies liquid to the sheet of paper P to form an image.

The drying unit 402 includes a drying mechanism 421 and a conveying mechanism 422. The drying mechanism 421 dries ink adhering to the sheet of paper P in the image forming unit 306. The conveying mechanism 422 conveys the sheet of paper P conveyed from the image forming unit 306. The sheet of paper P conveyed from the image forming unit 306 is received by the conveying mechanism 422. After that, the sheet of paper P is conveyed so as to pass through the drying mechanism 421 and delivered to the paper ejection unit 403. When the sheet of paper P passes through the drying mechanism 421, ink on the sheet of paper P is subjected to a drying process. Through the drying process, liquid such as moisture in the ink evaporates to make the ink adhere to the sheet of paper P, and curling of the sheet of paper P is restricted.

The paper ejection unit 403 includes a paper ejection tray 431 on which a plurality of sheets of paper P are stacked. The sheet of paper P conveyed from the drying unit 402 is sequentially stacked and held on the paper ejection tray 431. In the present embodiment, the configuration of the paper ejection unit 403 is not limited as long as the paper ejection unit 403 ejects the sheet of paper P.

The control device 423 is an information processing device that controls the image forming apparatus 103. The control device 423 includes, for example, a CPU, a RAM, a ROM, an SSD (HDD), and a communication device. The control device 423 communicates with the DFE 102 to receive setting values and operation requests according to execution of a task.

The image forming apparatus 103 includes a display 440 (an example of display means). The display 440 may be an internal display or an external display. The image forming apparatus 103 displays, for example, a maintenance schedule on the display 440. The maintenance schedule may also be displayed by, for example, the terminal apparatus 101 or the DFE 102.

### Server Apparatus

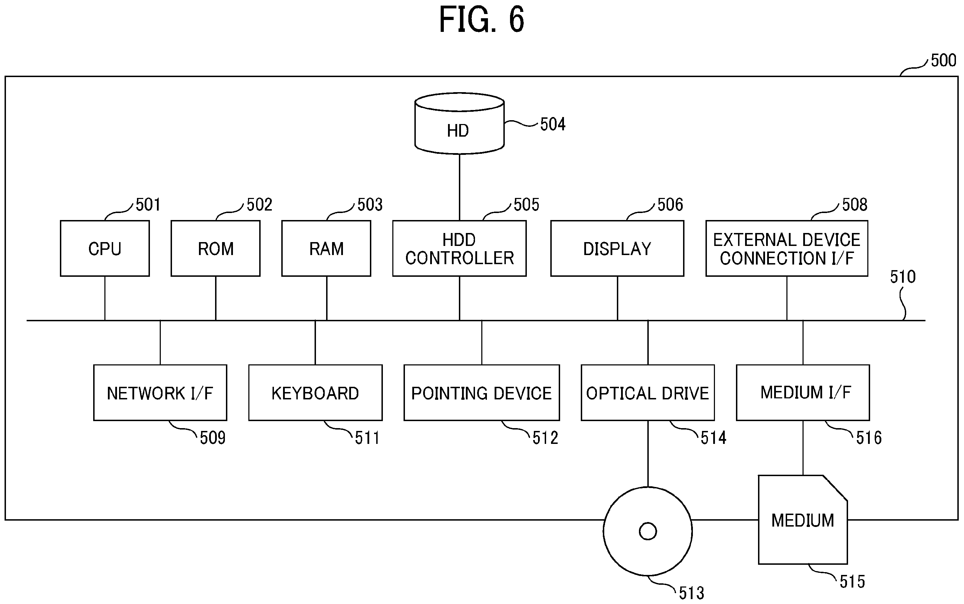

As illustrated in FIG. 6, the server apparatus 104 has a configuration of a computer 500. FIG. 6 is a block diagram illustrating the hardware configuration of the computer 500. As illustrated in FIG. 6, the computer 500 is implemented by a computer, and includes a CPU 501, a ROM 502, a RAM 503, a hard disk (HD) 504, an HDD controller 505, a display 506, an external device connection I/F 508, a network I/F 509, a bus line 510, a keyboard 511, a pointing device 512, an optical drive 514, and a media I/F 516.

The CPU 501 controls the overall operation of the computer 500. The ROM 502 stores a program such as an initial program loader (IPL) to boot the CPU 501. The RAM 503 is used as a work area for the CPU 501. The HD 504 stores various types of data such as a program. The HDD controller 505 controls reading or writing of various types of data from or to the HD 504 under control of the CPU 501. The display 506 displays various types of information such as a cursor, a menu, a window, text, or an image. The external device connection I/F 508 is an interface for connecting the computer 500 to various external devices. The external devices include, for example, but not limited to, a universal serial bus (USB) memory and various printers. The network I/F 509 is an interface for performing data communication using a communication network. The bus line 510 is, for example, an address bus or a data bus for electrically connecting the components illustrated in FIG. 6, such as the CPU 501, to each other.

The keyboard 511 serves as an input means including a plurality of keys to be used for inputting, for example, characters, numerical values, and various instructions. The pointing device 512 serves as an input means to be used for, for example, selecting or executing various kinds of instructions, selecting a target for processing, or moving a cursor being displayed. The optical drive 514 controls reading or writing of various types of data from or to an optical storage medium 513, which serves as a removable recording medium. Examples of the optical storage medium 513 include, but are not limited to, a compact disc (CD), a digital versatile disc (DVD), and a Blu-ray° disc. The media I/F 516 controls reading or writing (storing) of data from or to a recording medium 515 such as a flash memory.

### Functions

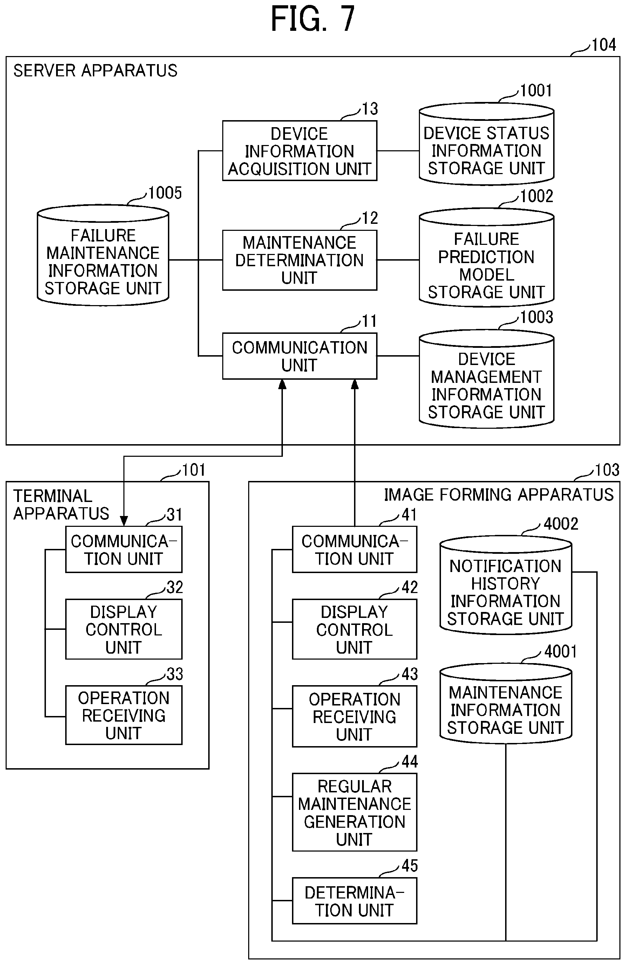

Functions of the apparatuses included in the maintenance management system 100 will be described with reference to, for example, FIG. 7. FIG. 7 is a block diagram illustrating a functional configuration of the server apparatus 104, the terminal apparatus 101, and the image forming apparatus 103, which are included in the maintenance management system 100.

### Server Apparatus

The server apparatus 104 includes a communication unit 11, a maintenance determination unit 12, and a device information acquisition unit 13. The functions of the server apparatus 104 are functions or means implemented by the CPU 501 illustrated in FIG. 6 executing instructions included in one or more programs installed in the server apparatus 104.

The server apparatus 104 further includes a device status information storage unit 1001, a failure prediction model storage unit 1002, a device management information storage unit 1003, and a failure maintenance information storage unit 1005. Each of the storage units described above is implementable by, for example, the HD 504 or the RAM 503 illustrated in FIG. 6.

The communication unit 11 receives device status information from the image forming apparatus 103. In response to the maintenance determination unit 12 detecting a sign of failure, the communication unit 11 transmits additional maintenance information to the image forming apparatus 103. Further, the communication unit 11 refers to device management information stored in the device management information storage unit 1003 and sends a notification to the contact address of an operator in charge of maintenance of the image forming apparatus 103 in which the failure has occurred.

The device information acquisition unit 13 acquires the device status information from the image forming apparatus 103 via the communication unit 11 and stores the device status information in the device status information storage unit 1001. The device status information indicates in-use conditions of the image forming apparatus 103. The device status information is information including a measurement value obtained by measuring, for example, current, voltage, or temperature of the components of the image forming apparatus 103 with various sensors and a counter value indicating the number of times print data was printed on a sheet of paper by the image forming apparatus 103.

The maintenance determination unit 12 detects a sign of failure occurring in the image forming apparatus 103, based on the device status information acquired by the device information acquisition unit 13 and a failure prediction model stored in the failure prediction model storage unit 1002 described below. The sign of failure includes a kind of failure (type of failure) predicted to occur in the image forming apparatus 103. The sign of failure may further include, for example, the probability of occurrence of failure, the time taken for failure to occur, and the severity of failure predicted to occur.

Further, the maintenance determination unit 12 identifies, in accordance with the type of a failure for which the sign has been detected, additional maintenance to be performed from a failure type stored in the failure maintenance information storage unit 1005.

In FIG. 7, the server apparatus 104 does not perform processing of a screen to be displayed on the display 440 by the image forming apparatus 103. This is because the image forming apparatus 103 generates a screen in the present embodiment. In another embodiment, the server apparatus 104 may generate screen information of a screen to be displayed by the image forming apparatus 103. In this case, the server apparatus 104 generates screen information such as a maintenance schedule using, for example, HTML, XML, JavaScript^{®}, and CSS formats and transmits the generated screen information to the image forming apparatus 103. A web browser of the image forming apparatus 103 receives the screen information and analyzes the received screen information to display a maintenance schedule screen described below. In this way, the maintenance schedule screen may be displayed by a web application in which a server function of the server apparatus 104 and the web browser executed by the image forming apparatus 103 cooperate with each other. In this case, a web browser makes it easy for, for example, the terminal apparatus 101 to display the maintenance schedule screen, provided that the terminal apparatus 101 includes the web browser.

### Device Status Information Storage Unit 1001

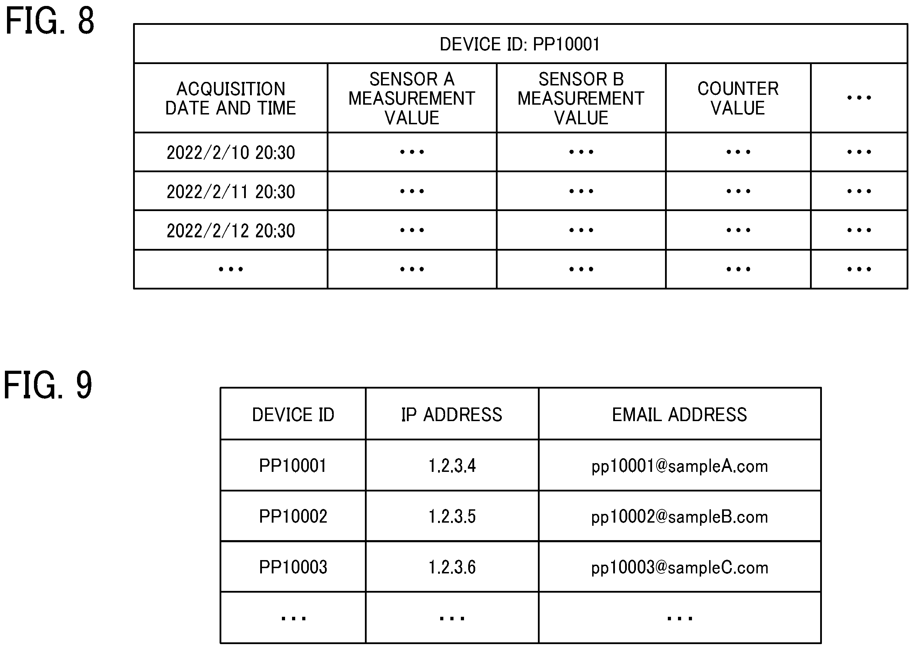

FIG. 8 is a table illustrating an example of device status information stored in the device status information storage unit 1001. As illustrated in FIG. 8, the device status information storage unit 1001 stores, for example, an acquisition date and time, a sensor A measurement value, a sensor B measurement value, and a counter value in association with a device ID for uniquely identifying the image forming apparatus 103. In addition to the device status information with the device ID "PP10001" illustrated in FIG. 8, device status information of other devices is also stored in the device status information storage unit 1001. The device status information indicates a record of measurement values and a counter value in the image forming apparatus 103 for each predetermined time.

The acquisition date and time indicates a date and time when the image forming apparatus 103 transmits the device status information to the server apparatus 104. In the example illustrated in FIG. 8, the device status information is transmitted every day at 20:30. However, such a time of transmission is merely given by way of example. In another embodiment, the device status information may be transmitted at irregular intervals or multiple times a day.

The sensor A measurement value and the sensor B measurement value are measurement values obtained by measuring, for example, currents, voltages, and temperatures of components of the image forming apparatus 103 by the respective sensors. Three or more sensor measurement values are typically obtained.

The counter value indicates an accumulated value of the number of pages printed by the image forming apparatus 103.

The maintenance determination unit 12 predicts the occurrence of failure in the image forming apparatus 103, based on the device status information and the failure prediction model stored in the failure prediction model storage unit 1002.

### Failure Prediction Model Storage Unit 1002

The failure prediction model is data obtained by modeling, for example, patterns of the measurement values or the counter value when a failure occurs. Such a failure prediction model is present for each type of failure (failure type). Respective failure prediction models may further be prepared for device types.

For example, the failure prediction model storage unit 1002 stores a failure prediction model A for predicting the occurrence of failure A, a failure prediction model B for predicting the occurrence of failure B, and a failure prediction model C for predicting the occurrence of failure C. The failure prediction model is information that associates the device status information with, for example, the probability of occurrence of failure, the time taken for failure to occur, and the severity of failure predicted to occur. Such information may be manually created in advance by, for example, the administrator on the basis of previous findings. Alternatively, such information may be created by machine learning. The failure prediction model also estimates a target module for which the occurrence of failure is predicted.

Machine learning is a technique that enables a computer to acquire human-like learning ability. Machine learning refers to a technology that enables a computer to autonomously generate an algorithm to be used for determination such as data identification from training data loaded in advance and apply the generated algorithm to new data to make a prediction. Any of supervised learning, unsupervised learning, semi-supervised learning, reinforcement learning, and deep learning, or a combination of two or more of those learning methods may be used as a learning method for machine learning. The learning method for machine learning is not limited to any particular learning method. Methods for machine learning include, for example, perceptron, deep learning, support vector machine, logistic regression, naive Bayes, decision tree, and random forest, and are not limited to the techniques described in the present embodiment.

For example, in a failure prediction model using deep learning as one of machine learning, the administrator prepares a set of e.g., device status information, a failure that has occurred, a time until the failure occurs, and severity as training data. A given information processing apparatus learns how to deal with the failure, with e.g., inputs of the device status information, the failure that has occurred, the time until the failure occurrence, and the severity as training data. In another example, in a failure prediction model using multiple regression as one of the machine learning techniques, a person in charge associates device status information as an explanatory variable with a failure that has occurred as an objective variable by using a polynomial. Likewise, the person in charge associates the device status information with the time taken until the failure occurs by using a polynomial, and associates the device status information with the severity of the failure by using a polynomial. The person in charge determines coefficients of the polynomials such that the differences between these objective variables and the output values of the polynomials are minimized (multiple regression analysis).

The prediction of failure will be described with reference to the device status information illustrated in FIG. 8. For example, the device status information with the device ID "PP10001" is acquired. Then, the maintenance determination unit 12 predicts the occurrence of the failure A (or detects a sign of the failure A), based on the device status information and the failure prediction model A for predicting the occurrence of the failure A. The maintenance determination unit 12 also predicts the occurrence of the failure B (or detects a sign of the failure B), based on the device status information and the failure prediction model B for predicting the occurrence of the failure B. Other failures may be predicted in a similar way. In the way described above, the maintenance determination unit 12 predicts the occurrence of, for example, the failures A to C corresponding to the respective failure prediction models for the failures A to C stored in the failure prediction model storage unit 1002, respectively.

### Device Management Information Storage Unit 1003

FIG. 9 is a table illustrating an example of device management information stored in the device management information storage unit 1003. As illustrated in FIG. 9, items "device ID", "IP address", and "email address" are registered in the device management information storage unit 1003.

The item "device ID" is identification information for identifying the image forming apparatus 103.

The item "IP address" is an internet protocol (IP) address of the image forming apparatus 103. In one embodiment, the server apparatus 104 transmits, for example, additional maintenance information to the IP address as the destination.

The item "email address" is an email address of, for example, the administrator of the image forming apparatus 103. In one embodiment, the server apparatus 104 transmits, for example, information indicating that additional maintenance has been set to the email address as the destination.

### Failure Maintenance Information Storage Unit 1005

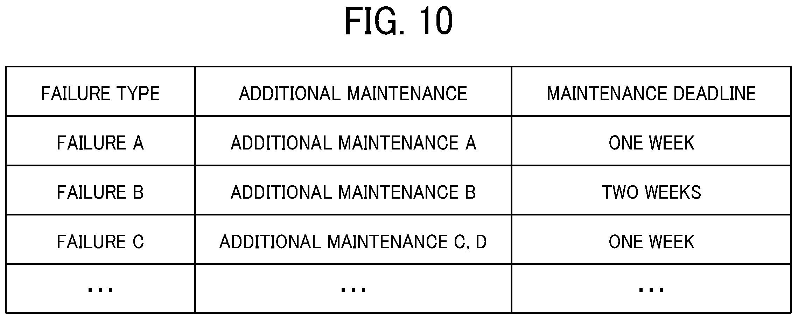

FIG. 10 is a table illustrating an example of failure maintenance information stored in the failure maintenance information storage unit 1005. As illustrated in FIG. 10, items "additional maintenance" and "maintenance deadline" are registered in the failure maintenance information storage unit 1005 in association with each failure type. The failure maintenance information may be common or different across device models.

The item "failure type" indicates what kind of sign of failure has been detected by the maintenance determination unit 12.

The item "additional maintenance" indicates the content of an activity of additional maintenance to be performed for the failure for which the sign has been detected. The content of an activity of additional maintenance also includes a target module.

The item "maintenance deadline" indicates a period of time by which the additional maintenance is to be performed. A period of time starting from the date of diagnosis by the maintenance determination unit 12 is set as the maintenance deadline. Failure does not occur immediately after the expiration of the maintenance deadline, but the probability of failure may gradually increase after the expiration of the maintenance deadline.

### Terminal Apparatus

Referring again to FIG. 7, the functional configuration of the terminal apparatus 101 will be described. The terminal apparatus 101 includes a communication unit 31, a display control unit 32, and an operation receiving unit 33. The functions of the terminal apparatus 101 are functions or means implemented by the web browser executing JavaScript° included in screen information and cooperating with the web application of the server apparatus 104.

The communication unit 31 typically communicates with the server apparatus 104 to receive screen information of a maintenance schedule screen from the server apparatus 104 and transmit information entered by the administrator on, for example, the maintenance schedule screen to the server apparatus 104.

The display control unit 32 analyzes the screen information transmitted from the server apparatus 104 and displays, for example, the maintenance schedule screen described below on the display 440.

The operation receiving unit 33 receives an operation on and an input to, for example, the maintenance schedule screen by the administrator or a general user.

### Image Forming Apparatus

The functional configuration of the image forming apparatus 103 will be described. The image forming apparatus 103 includes a communication unit 41, a display control unit 42, an operation receiving unit 43, a regular maintenance generation unit 44, and a determination unit 45. The functions of the image forming apparatus 103 are functions or means implemented by the control panel 82 or the control device 423 executing instructions included in one or more programs installed in the image forming apparatus 103.

The image forming apparatus 103 further includes a maintenance information storage unit 4001 and a notification history information storage unit 4002. The storage units described above can be implemented by, for example, the HDD or the SSD of the control panel 82 or the control device 423.

The communication unit 41 communicates with the communication unit 11 of the server apparatus 104. The communication unit 41 is implemented by, for example, a communication interface that performs communication using transmission control protocol/internet protocol (TCP/IP), such as a network card, or a communication program that controls communication with a USB cable. The communication unit 41 transmits the device status information to the server apparatus 104. The communication unit 41 receives additional maintenance information and stores the additional maintenance information in the maintenance information storage unit 4001.

The display control unit 42 displays a maintenance schedule screen that presents a scheduled date of regular maintenance stored in the maintenance information storage unit 4001, and a recommended start date of additional maintenance. The display control unit 42 further displays the accelerated execution proposal screen 700 to recommend accelerated execution of the regular maintenance.

The operation receiving unit 43 receives an operation on and an input to, for example, the maintenance schedule screen and the accelerated execution proposal screen 700 by a user.

The regular maintenance generation unit 44 determines whether to perform regular maintenance. When the regular maintenance generation unit 44 determines that the regular maintenance is to be performed, the regular maintenance generation unit 44 stores regular maintenance information in the maintenance information storage unit 4001. The regular maintenance generation unit 44 determines, based on, for example, the counter value, that regular maintenance is to be performed at intervals of a counter value indicating a certain number of printed pages. The regular maintenance generation unit 44 determines to perform regular maintenance determined in accordance with the counter value. Since a regular maintenance workload is low and the working time involved in regular maintenance is short, the regular maintenance generation unit 44 allocates several hours, on an hourly basis, or one day, on a daily basis, for the regular maintenance in the schedule.

In response to receipt of the additional maintenance information from the server apparatus 104, the determination unit 45 determines whether to recommend an accelerated execution of the regular maintenance. A detailed description of this will be given below.

### Maintenance Information Storage Unit 4001

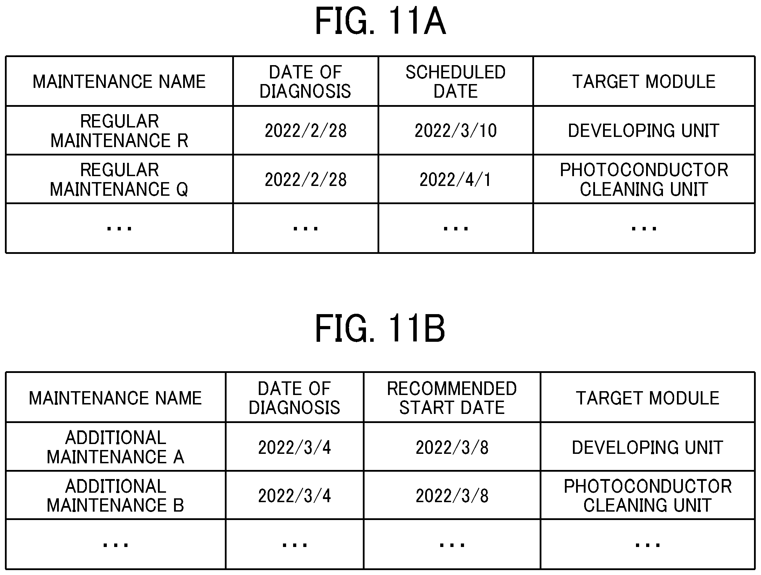

Maintenance information will be described with reference to FIGs. 11A to 11C. The image forming apparatus 103 stores maintenance information that includes additional maintenance information transmitted from the server apparatus 104 and regular maintenance information generated by the image forming apparatus 103. The regular maintenance information and the additional maintenance information will now be described.

FIG. 11A illustrates the regular maintenance information generated by the regular maintenance generation unit 44. As illustrated in FIG. 11A, regular maintenance schedules generated in the image forming apparatus 103 are registered in chronological order. The regular maintenance information includes items "maintenance name", "date of diagnosis", "scheduled date", and "target module".

The item "maintenance name" is the name of regular maintenance determined by the regular maintenance generation unit 44 in accordance with the counter value.

The item "date of diagnosis" is a date on which the regular maintenance generation unit 44 determines that the regular maintenance is to be performed. The date of diagnosis may be a predetermined time such as once every two weeks, once a day, or a predetermined day of the week. The above is an example of the frequency of diagnosis. The frequency of diagnosis may vary depending on the type of maintenance or the object to be subjected to maintenance.

The item "scheduled date" is a date on which or a period within which the regular maintenance is to be performed, and the date or period is determined by the regular maintenance generation unit 44. The date on which the regular maintenance is to be performed is, for example, a date on which the counter value is expected to reach a certain value.

The item "target module" is a component or an object to be subjected to the regular maintenance.

FIG. 11B illustrates the additional maintenance information transmitted from the server apparatus 104 and related to additional maintenance. The additional maintenance information includes items "maintenance name", "date of diagnosis", "recommended start date", and "target module". The item "maintenance name" may be the same or substantially the same as that in FIG. 11A.

The "date of diagnosis" is a date on which the maintenance determination unit 12 detects a sign of failure. The date of diagnosis is transmitted from the server apparatus 104.

The item "recommended start date" is a start time at which the execution of additional maintenance is recommended. For example, the recommended start date may be any date within a period of time from the following date of the date of diagnosis to the date determined by adding the maintenance deadline in the failure maintenance information to the date of diagnosis. The recommended start date is transmitted from the server apparatus 104.

The item "target module" is a module (component or object) to be subjected to the additional maintenance. The target module is included in the item "additional maintenance" in the failure maintenance information storage unit 1005. The target module is transmitted from the server apparatus 104.

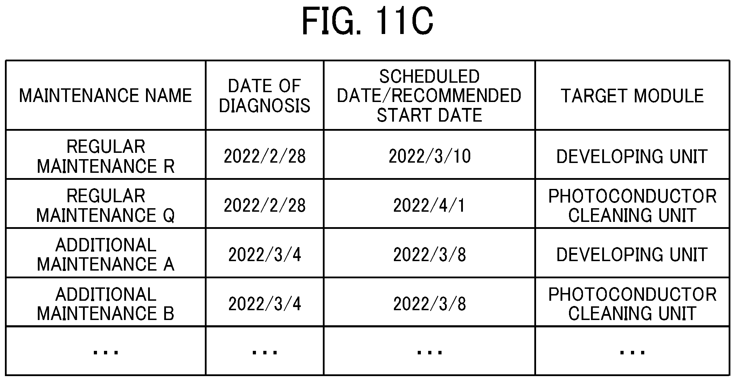

Accordingly, the maintenance information storage unit 4001 of the image forming apparatus 103 stores maintenance information obtained by combining the regular maintenance information illustrated in FIG. 11A and the additional maintenance information illustrated in FIG. 11B. FIG. 11C illustrates an example of the maintenance information stored in the maintenance information storage unit 4001. The maintenance information includes items "maintenance name", "date of diagnosis", and "target module", which correspond to those in FIG. 11A or 11B. In other words, the items "maintenance name", "date of diagnosis", and "target module" are the same as the items "maintenance name", "date of diagnosis", and "target module" in the regular maintenance information illustrated in FIG. 11A or the additional maintenance information illustrated in FIG. 11B, respectively. The maintenance information further includes item "scheduled date/recommended start date", which corresponds to the item "scheduled date" in FIG. 11A or the item "recommended start date" in FIG. 11B.

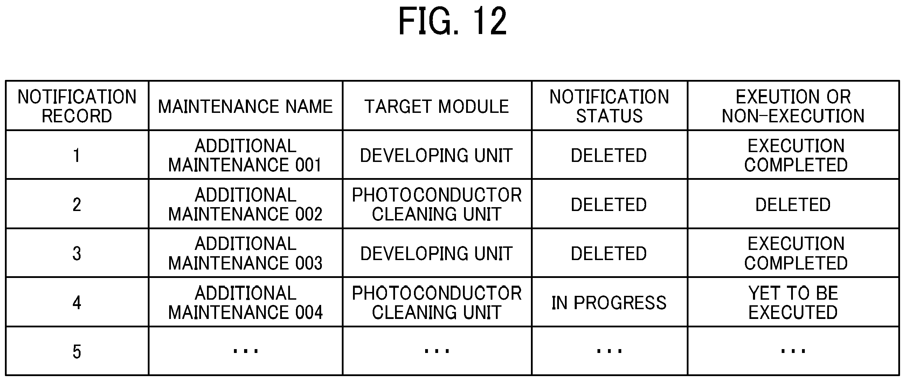

FIG. 12 illustrates an example of notification history information stored in the notification history information storage unit 4002.

The notification history information includes a history of all of items of additional maintenance information sent as notifications from the server apparatus 104. The items of additional maintenance information include one or more items of additional maintenance for which accelerated execution of regular maintenance are not recommended.

The notification history information includes items "notification record", "maintenance name", "target module", "notification status", and "execution or non-execution."

The item "notification record" stores identification information of additional maintenance for which the accelerated execution of regular maintenance is determined to be recommended. In one embodiment, each notification record is indicated by the date and time of notification of the additional maintenance. In another embodiment, each notification record is indicated by a serial number.

The item "maintenance name" stores the name or identification information of additional maintenance for which the accelerated execution of regular maintenance is determined to be recommended.

The item "target module" stores a target module for additional maintenance for which the accelerated execution of regular maintenance is determined to be recommended.

The item "notification status" stores "in progress" or "deleted." The status "in progress" is stored when notification of the accelerated execution of regular maintenance is provided, but the regular maintenance is yet to be executed. The status "deleted" is stored when the regular maintenance for which notification of the accelerated execution is provided has already been executed or when the accelerated execution is not performed and the notification does not have to be provided. The accelerated execution of the corresponding regular maintenance is not performed nor is the notification thereof provided in a case where the period of time until the scheduled date of the regular maintenance is less than or equal to a predetermined number of days.

The item "execution or non-execution" stores information indicating whether the regular maintenance for which the accelerated execution is recommended has been executed in an accelerated way or is yet to be executed.

In the notification history information storage unit 4002, regular maintenance for which the accelerated execution is determined to be recommended may be registered in association with the items "notification record", "maintenance name", "target module", "notification status", and "execution or non-execution."

### Example Screen

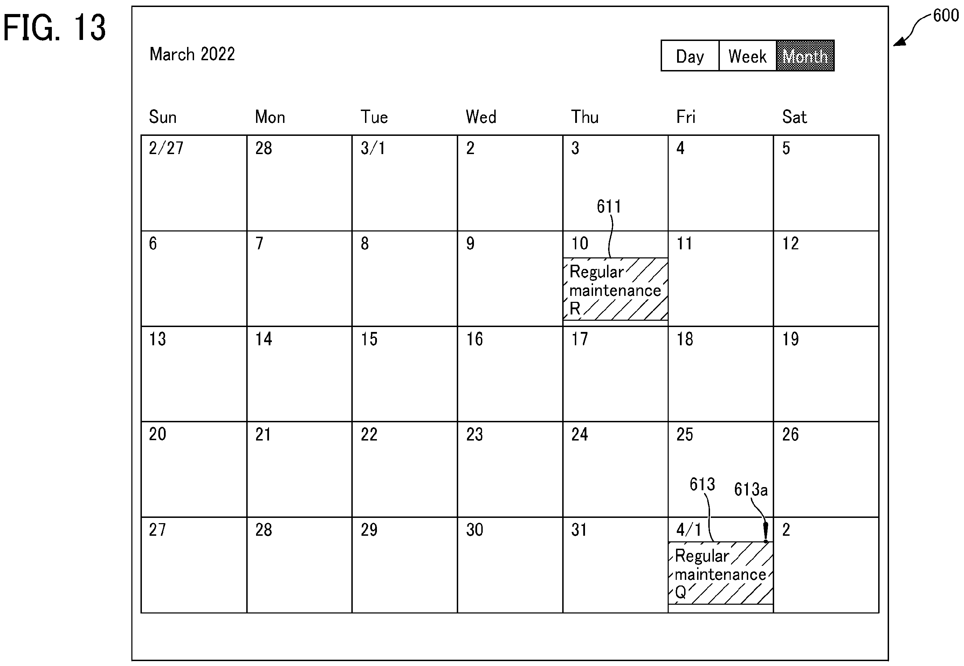

FIG. 13 illustrates a maintenance schedule screen 600 based on the maintenance information illustrated in FIG. 11C, which is stored in the maintenance information storage unit 4001. The maintenance schedule screen 600 presents regular maintenance 611 and regular maintenance 613 on scheduled dates of regular maintenance, based on regular maintenance R and regular maintenance Q illustrated in FIG. 11C, respectively. The schedules based on additional maintenance A and additional maintenance B illustrated in FIG. 11B are not presented. In another embodiment, the schedules are presented.

The maintenance schedule screen 600 presents a mark 613a for regular maintenance for which the accelerated execution is determined to be recommended for additional maintenance. For example, the accelerated execution of the regular maintenance 613 is recommended for additional maintenance. In this case, the display control unit 42 displays the mark 613a on the scheduled date of the regular maintenance 613. In response to the user pressing the mark 613a or mousing over the mark 613a, information indicating that the accelerated execution of the regular maintenance associated with the mark 613a is recommended for additional maintenance is displayed.

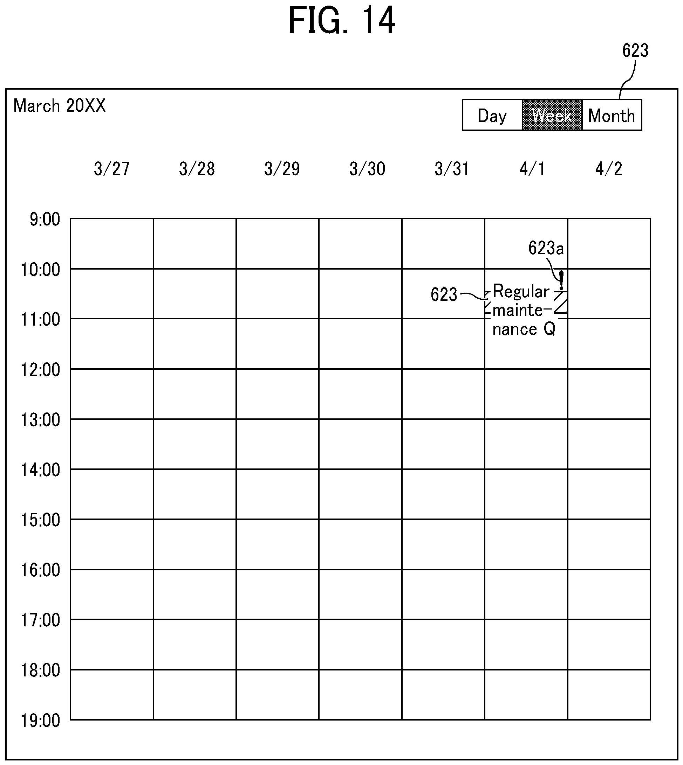

FIG. 14 illustrates an example of the maintenance schedule screen 600, which is a weekly maintenance schedule screen. In FIG. 14, the regular maintenance Q (represented by reference numeral 623) is displayed in the time slot of 10:00 am to 11:00 am on April 1, which is a scheduled date. A mark 623a is also displayed in a manner similar to that of the mark 613a illustrated in FIG. 13. In response to the user pressing the mark 623a or mousing over the mark 623a, information indicating that the accelerated execution of the regular maintenance associated with the mark 623a is recommended for additional maintenance is displayed.

The regular maintenance Q may be displayed in a time slot other than the time slot of 10:00 am to 11:00 am. In one example, the regular maintenance Q is scheduled in a time slot other than a time slot in which the production of printed materials is planned. In another example, the regular maintenance Q may be scheduled on the scheduled date at a time following the end time of the planned production of printed materials. As a result, the user can perform maintenance after the production of printed materials. In one embodiment, the user sets in advance a time slot in which regular maintenance is scheduled.

While a weekly maintenance schedule is illustrated FIG. 14, the same applies to a daily maintenance schedule.

### Determination of whether to Recommend Accelerated Execution of Maintenance

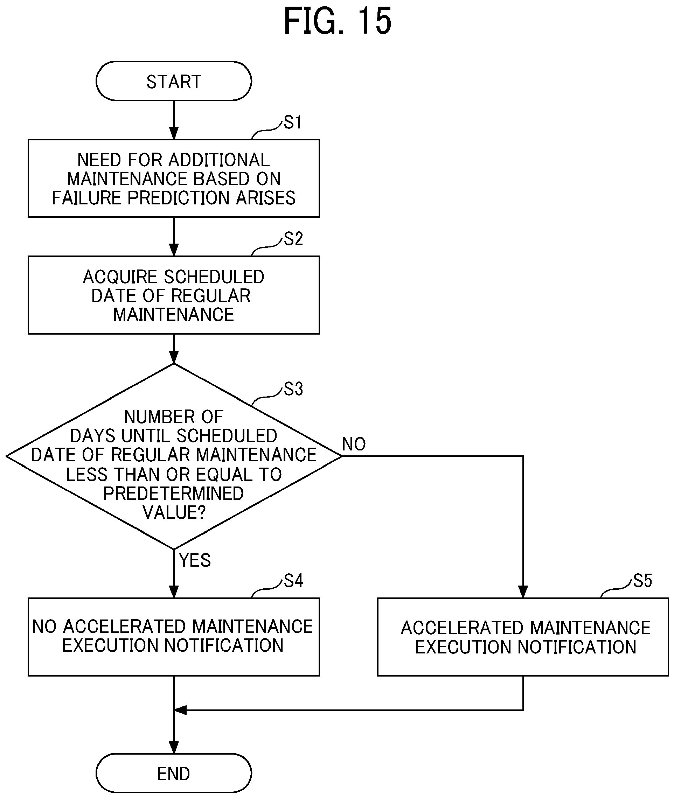

A method for determining whether to recommend accelerated execution of maintenance will be described with reference to FIG. 15. FIG. 15 is a flowchart illustrating a process in which the determination unit 45 determines whether to recommend accelerated execution of maintenance.

As indicated in step S1, the process illustrated in FIG. 15 is performed when a need for additional maintenance based on failure prediction arises (S1). The image forming apparatus 103 receives additional maintenance information from the server apparatus 104.

When a need for additional maintenance based on failure prediction arises, the determination unit 45 acquires a scheduled date of regular maintenance from the maintenance information storage unit 4001 (S2).

The determination unit 45 refers to a scheduled date of regular maintenance associated with the same target module as the target module for additional maintenance that is added and determines whether the period of time until the scheduled date of the regular maintenance is less than or equal to a predetermined number of days (S3). In this case, the additional maintenance may be scheduled on, for example, a date of diagnosis or a recommended start date. The predetermined number of days is, for example, seven days from the scheduled date of the additional maintenance. In one embodiment, the predetermined number of days may be set by the user. The reason why it is determined whether to recommend the accelerated execution of the regular maintenance in accordance with whether the period of time until the scheduled date of the regular maintenance is less than or equal to a predetermined number of days is that it is difficult for the user to support an abrupt recommendation if the period of time until the scheduled date of the regular maintenance is short.

In step S3, the determination unit 45 may refer to a scheduled date of, instead of regular maintenance associated with the same target module as the target module for additional maintenance that is added, regular maintenance for which parts included in the target module are common to additional maintenance that is added. Accordingly, the determination unit 45 can determine to recommend an accelerated execution of regular maintenance that is the same as or similar to additional maintenance.

In one example, the determination of step S3 is performed by AI. In this case, the AI learns a correspondence between the number of days until the scheduled date of the regular maintenance and whether the user has performed an accelerated execution of the regular maintenance. The AI receives, as an input, the number of days until the scheduled date of the regular maintenance and outputs a probability that the user performs an accelerated execution of the regular maintenance. For example, in a case where the probability of performing the accelerated execution of the regular maintenance is greater than or equal to 50%, the AI determines to provide an accelerated execution notification. Accordingly, the AI can determine to provide an accelerated execution notification at an appropriate time.

In a case where the AI determines to provide an accelerated execution notification, the AI may propose the date and time of the accelerated execution in consideration of the schedule of the user and the planned schedule for the printing of printed materials by the image forming apparatus 103. In other words, the AI picks up a time slot that spans a certain period of time or more and in which both the schedule of the user and the planned schedule for the printing of printed materials are free from among time slots until the scheduled date of the regular maintenance. The certain period of time is determined in consideration of the time taken for maintenance to be performed on the target module for maintenance. The AI presents a list of available time slots to the user in order of closeness to the current date and time. As a result, for example, in a case where the user's timetable indicates that the next one hour is available and no printing of printed materials is scheduled for the next one hour, the probability that the user performs the accelerated execution of the regular maintenance increases.

When the determination result in step S3 is Yes, it is estimated that it is difficult for the user to perform the accelerated execution of the regular maintenance due to work or the like, and the determination unit 45 determines not to recommend the accelerated execution of the regular maintenance (S4).

When the determination result in step S3 is No, it is estimated that the user can perform the accelerated execution of the regular maintenance, and the determination unit 45 determines to recommend the accelerated execution of the regular maintenance (S5).

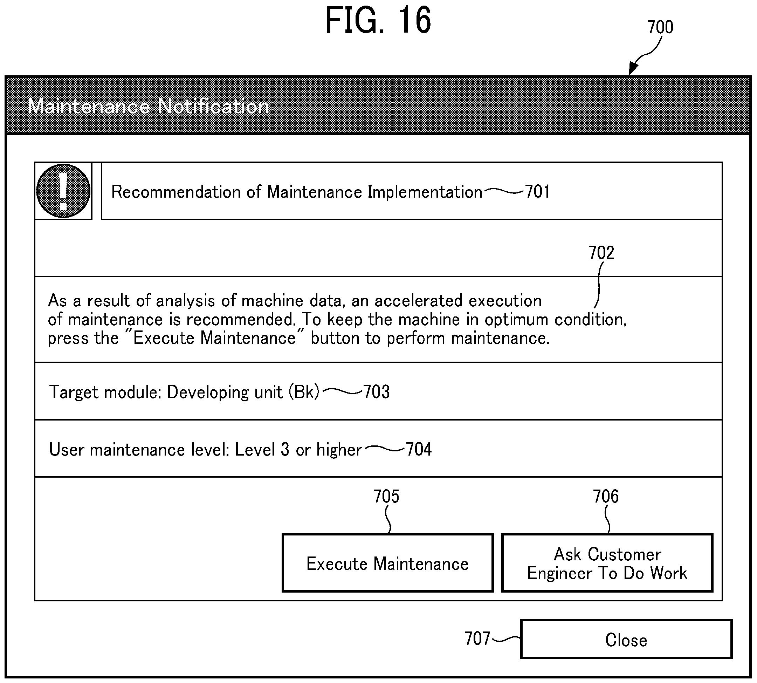

The display control unit 42 causes the display 440 to display the accelerated execution proposal screen 700 for the regular maintenance, as illustrated in FIG. 16. As described above, in one embodiment, the display control unit 42 displays information related to the accelerated execution of a maintenance schedule for regular maintenance, based on a maintenance schedule for additional maintenance. The determination unit 45 stores, in the notification history information storage unit 4002, additional maintenance for which the accelerated execution of regular maintenance is determined to be recommended. The item "notification status" is set to "in progress" as the initial value. The item "execution or non-execution" is set to "yet to be executed" as the initial value.

### Example Notification for Recommending Accelerated Execution

FIG. 16 illustrates the accelerated execution proposal screen 700 for regular maintenance to provide a recommendation for the accelerated execution of regular maintenance. The accelerated execution proposal screen 700 displays a title 701 indicating "recommendation of maintenance execution," and a message 702 indicating "As a result of analysis of machine data, the accelerated execution of maintenance is recommended. To keep the machine in optimum condition, press the "Execute Maintenance" button to perform maintenance". The accelerated execution proposal screen 700 further displays a target module 703 and a user maintenance level 704.

The target module 703 is acquired from the item "target module" in the maintenance information storage unit 4001. The user maintenance level 704 indicates the degree of difficulty in maintenance of the target module 703 and specifies the qualification or skill of the user required or recommended to perform the maintenance.

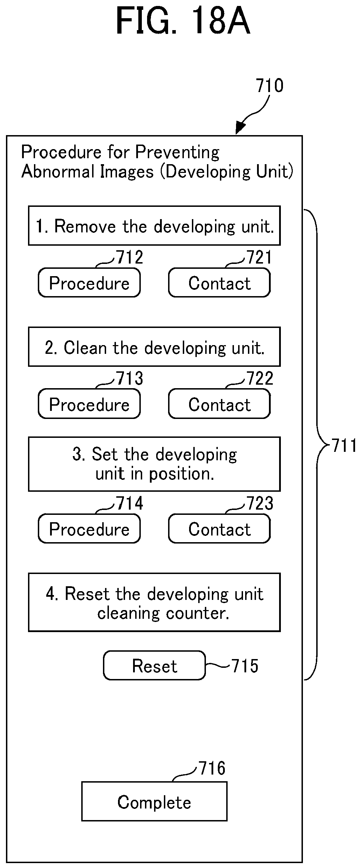

In response to the user pressing an "Execute Maintenance" button 705, a guidance screen for the maintenance work is displayed (see FIG. 18A). In response to the user pressing an "Ask Customer Engineer To Do Work" button 706, the content of additional maintenance for which the accelerated execution of regular maintenance is recommended is transmitted to the customer engineer (customer support center) via email or other means. In response to pressing of the "Execute Maintenance" button 705 or the "Ask Customer Engineer To Do Work" button 706, a process for automatically rescheduling the regular maintenance is performed. Specifically, the date of execution (scheduled date) of the regular maintenance is put forward in accordance with the date of execution (scheduled date) of additional maintenance that is added. For example, the regular maintenance is set simultaneously with the additional maintenance, the regular maintenance and the additional maintenance are combined together, the additional maintenance is replaced with the regular maintenance, or the schedule of the regular maintenance is canceled. After the "Execute Maintenance" button 705 or the "Ask Customer Engineer To Do Work" button 706 is pressed, a screen for setting accelerated execution details may be displayed to allow selection and setting of settings (a schedule, a method for the accelerated execution such as rescheduling, schedule integration, schedule replacement, or schedule deletion, and a future notification method) related to the accelerated execution of a specific schedule of regular maintenance or all the set schedules of regular maintenance.

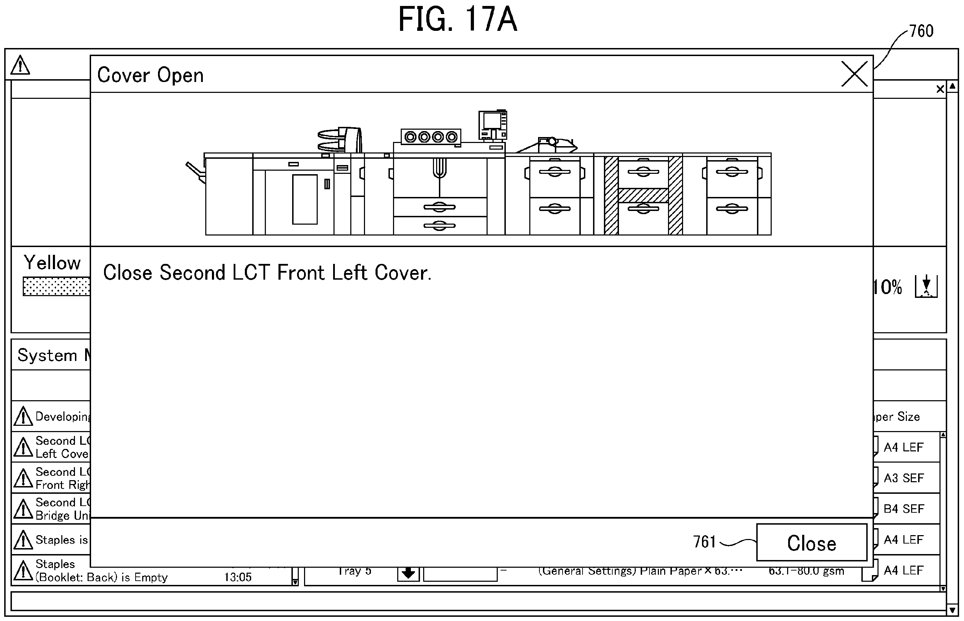

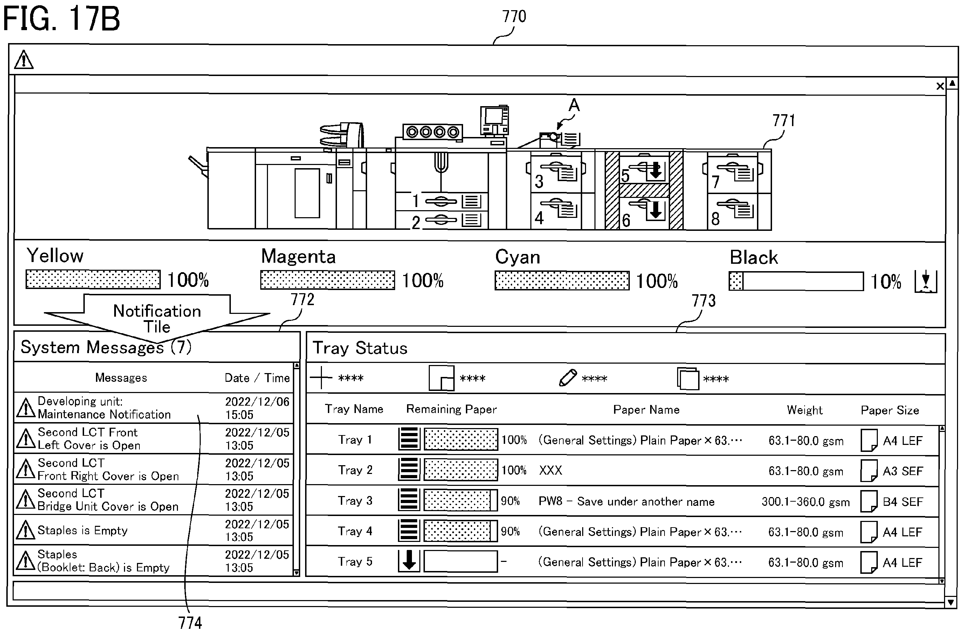

In response to the user pressing a "Close" button 707 without performing the accelerated execution of regular maintenance, the accelerated execution proposal screen 700 is hidden. The display control unit 42 displays a screen for printing. As illustrated in FIGs. 17A and 17B, the screen for printing may constantly display a system message indicating that an accelerated execution notification is in progress. In a case where this system message is present, the display control unit 42 may repeatedly display the accelerated execution proposal screen 700 at predetermined times. Examples of the predetermined times include a time at which the image forming apparatus 103 is powered on, a time at which the period of time for which the image forming apparatus 103 is not in operation becomes greater than or equal to a threshold, and a time at which the user logs in.

The regular maintenance for which the accelerated execution proposal screen 700 is displayed is that for which the item "notification status" of the notification history information in the notification history information storage unit 4002 is set to "in progress".

FIG. 17A is a warning screen 760 displayed in response to pressing of the "Close" button 707 on the accelerated execution proposal screen 700. In FIG. 17A, the cover is opened when the accelerated execution proposal screen 700 is displayed, and the warning screen 760 prompts the user to close the cover. In response to the user pressing a "Close" button 761 on the warning screen 760, a maintenance screen 770 illustrated in FIG. 17B is displayed.

FIG. 17B illustrates an example of the maintenance screen 770. The maintenance screen 770 includes an image 771 of the image forming apparatus 103, a system message field 772, and a tray status field 773. In the image 771, portions to which the user is to pay attention are highlighted with, for example, signs or icons. The system message field 772 displays various system messages. Each of the system messages is a message including a process performed by the image forming apparatus 103, a state of the image forming apparatus 103, or a matter of interest to the user. The system message field 772 displays a system message 774 indicating that an accelerated execution notification is in progress. The system messages may be displayed in ascending or descending order of date and time. When the number of displayed system messages is small, the system message 774 indicating that an accelerated execution notification is in progress is displayed all the time (or for a period of time sufficient for recognition). This allows the user to check the system message field 772 to understand that an accelerated execution notification is in progress until the notification status in the notification history information storage unit 4002 is changed to "deleted" even after the user closes the accelerated execution proposal screen 700.

FIG. 18A illustrates an example of a guidance screen 710. The guidance screen 710 presents a work procedure 711 for regular maintenance for which accelerated execution is recommended. In the example illustrated in FIG. 18A, the work procedure 711 includes the steps below. Each of the steps may be displayed with an estimated time taken for the step.
1 The operator removes a developing unit.
2 The operator cleans the developing unit.
3 The operator sets the developing unit in position.
4 The operator resets a developing unit cleaning counter.

Further, the user presses buttons 721 to 723 to contact experienced persons or experts registered for the respective steps to check whether the respective operations are correctly performed.

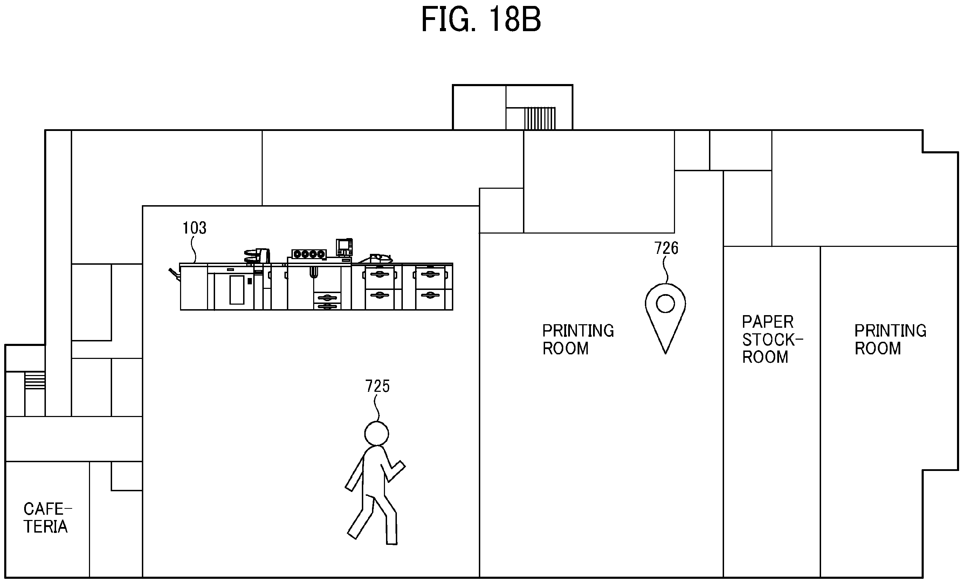

Alternatively, as illustrated in FIG. 18B, information indicating the location of the user may be displayed on a map, or information indicating the location of another user or information indicating the content of the operation being performed may be displayed on a map. FIG. 18B illustrates an example map of a print factory in which the image forming apparatus 103 is installed. The user himself/herself is indicated by an icon 725. Another user is indicated by a pin mark 726. FIG. 18B illustrates one pin mark 726, by way of example. In another example, a number of pin marks equal to the number of other users may be displayed. In one embodiment, an indoor messaging system (IMES) may be used to locate the position of the user. In another embodiment, an ultra-wideband (UWB) method may be used to detect a position. In the UWB method, a tag is attached to an object whose position is to be measured, such as the user, and receivers are installed indoors at intervals of 30 m to 40 m. Radio waves transmitted from the tag are received by two or more receivers to identify the location of the tag with an accuracy less than 1 m.

The user can be taught about the work method by another user, if any. For example, the image forming apparatus 103 displays, on the map, another user who has performed the same maintenance as the maintenance being performed by the user in an emphasized manner (for example, with a red pin mark). For example, a user with excellent performance (work speed) or a well experienced user may be selected as the user to be displayed in an emphasized manner.

In one embodiment, the image forming apparatus 103 or the server apparatus 104 may use so-called generative AI to create the work procedure 711. The generative AI has learned appropriate maintenance strategies and procedures for diagnosis results. In response to determining a maintenance strategy in accordance with a diagnosis result, the generative AI automatically generates a maintenance procedure and displays the guidance screen 710.

The guidance screen 710 further presents buttons 712 to 714 below the respective steps of the work procedure 711 to display the details of the steps. Since no further details are given for the step "4. Reset the developing unit cleaning counter", a reset button 715 is displayed.

The user executes the four steps and presses a "Complete" button 716. Then, information indicating that regular maintenance for which the accelerated execution is recommended has been performed is recorded in the notification history information storage unit 4002. In the notification history information storage unit 4002, the item "notification status" is set to "deleted", and the item "execution or non-execution" is set to "execution completed". After the "Complete" button 716 is pressed, the next maintenance schedule (the maintenance name and the date and time) may be displayed by the image forming apparatus 103. The user is less likely to forget the next maintenance schedule.

Further, the image forming apparatus 103 or the server apparatus 104 measures the time taken for the work to be completed and updates the performance of each user or presents the performance to the user. For example, the image forming apparatus 103 may display a graph illustrating a change in the time taken for the work performed by the same user during the same maintenance in the past, or display a comparison (such as a difference from an average or a difference from a shortest time) with the time taken for the work performed by another user during the same maintenance in the past.

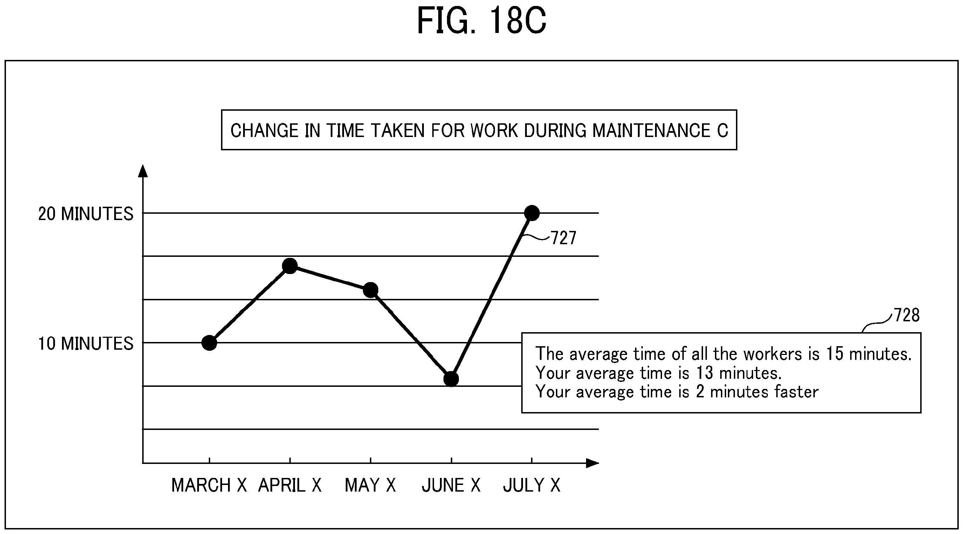

FIG. 18C illustrates performance information displayed by the image forming apparatus 103 after the completion of maintenance. The performance information includes a line graph 727 and a message box 728. The user views the line graph 727 to make a comparison with past performance. The message box 728 displays the messages "The average time of all the workers is 15 minutes", "Your average time is 13 minutes", and "Your average time is 2 minutes faster". The user can compare his or her performance with other users' performance.

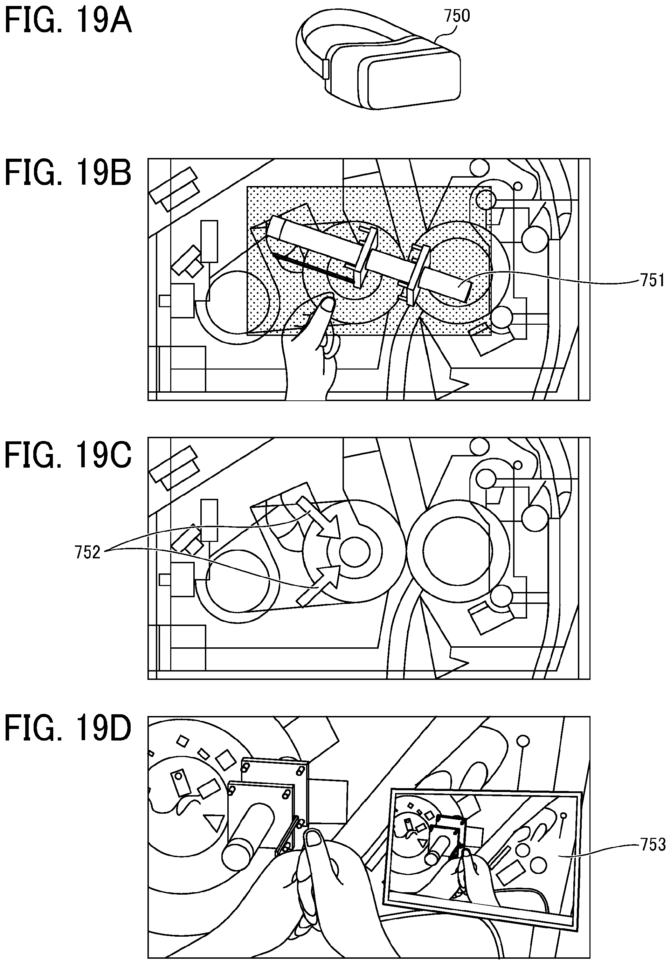

As illustrated in FIGs. 19A to 19D, maintenance may be performed with an augmented reality (AR) headset 750. FIGs. 19A to 19D schematically illustrate maintenance work carried out using the AR headset 750. FIG. 19A is an external view of the AR headset 750. The AR headset 750 is a type of display device that displays computer-generated images and sounds with the aid of a head-mounted display such that the images and sounds are superimposed on elements of the real world.

The user wearing the AR headset 750 is provided with information that supports regular maintenance to be executed in an accelerated way, and the information is sequentially displayed to the user. As illustrated in FIG. 19B, in response to the user opening the door of the image forming apparatus 103, a target module 751 is displayed to be superimposed on a scene of various target modules disposed behind the door. The user searches for a target module behind the door while viewing the image of the target module 751.

In parallel with the user's search, the AR headset 750 monitors the scene behind the door with a camera and detects the target module through image processing. In one embodiment, the AR headset 750 may detect the target module faster. As illustrated in FIG. 19C, in response to successful detection of the target module, the AR headset 750 displays, for example, arrows 752 to point to the target module in the real machine. In response to the AR headset 750 detecting, with the camera, the removal of the target module from the real machine by the user, as illustrated in FIG. 19D, the AR headset 750 displays a moving image 753 representing the work procedure of the regular maintenance. In one embodiment, the user performs maintenance on the target module at hand while viewing the moving image 753.

Accordingly, the AR headset 750 allows the user to easily perform regular maintenance.

### Process for Canceling Accelerated Execution Proposal Screen

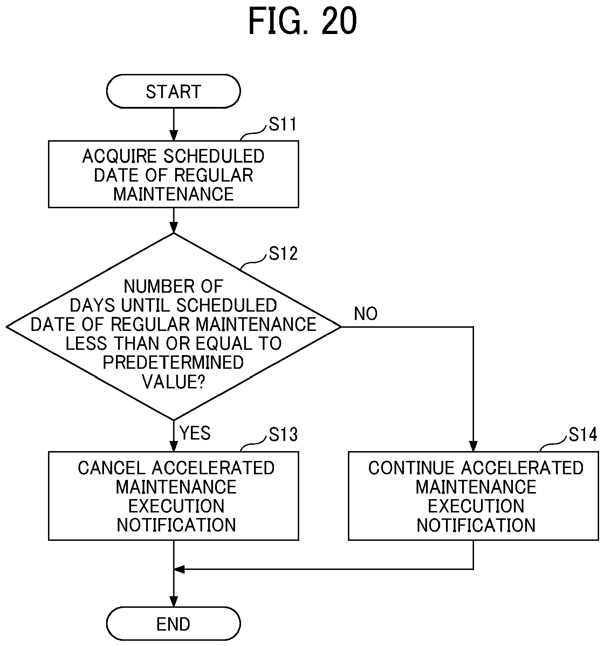

FIG. 20 is a flowchart illustrating a process for updating the notification history information stored in the notification history information storage unit 4002. The process illustrated in FIG. 20 is repeatedly executed. The term "periodically" refers to an event occurring at regular intervals such as once every several hours or at a predetermined time every day.

The determination unit 45 periodically accesses the notification history information storage unit 4002 and acquires a notification record for which the item "notification status" is set to "in progress" (S 11).

The determination unit 45 refers to a scheduled date of regular maintenance associated with the same target module as the target module for the additional maintenance in the notification history information and determines whether the period of time until the scheduled date of the regular maintenance is less than or equal to a predetermined number of days (for example, less than or equal to 7 days) (S12).

When the determination result in step S12 is Yes, the determination unit 45 determines to stop recommendation of the accelerated execution of the regular maintenance (S13). The determination unit 45 updates, in the notification history information storage unit 4002, the item "notification status" of the additional maintenance for which the accelerated execution of the regular maintenance is determined to be recommended to "deleted".

When the determination result in step S12 is No, the determination unit 45 determines to continue recommendation of the accelerated execution of the regular maintenance (S14). In this case, the display control unit 42 continuously displays the system messages illustrated in FIGs. 17A and 17B. The display control unit 42 may cause the display 440 to repeatedly display the accelerated execution proposal screen 700 for the regular maintenance, as illustrated in FIG. 16, at predetermined times.

Notification Control Based on Previous Execution History of Accelerated Executions Determined to be Recommended

In some embodiments, some users do not perform a recommended accelerated execution of maintenance. A recommendation of an accelerated execution of maintenance may annoy such users. Accordingly, a description will be given of notification control of recommendation of an accelerated execution of maintenance, based on a previous execution history of recommended accelerated executions.

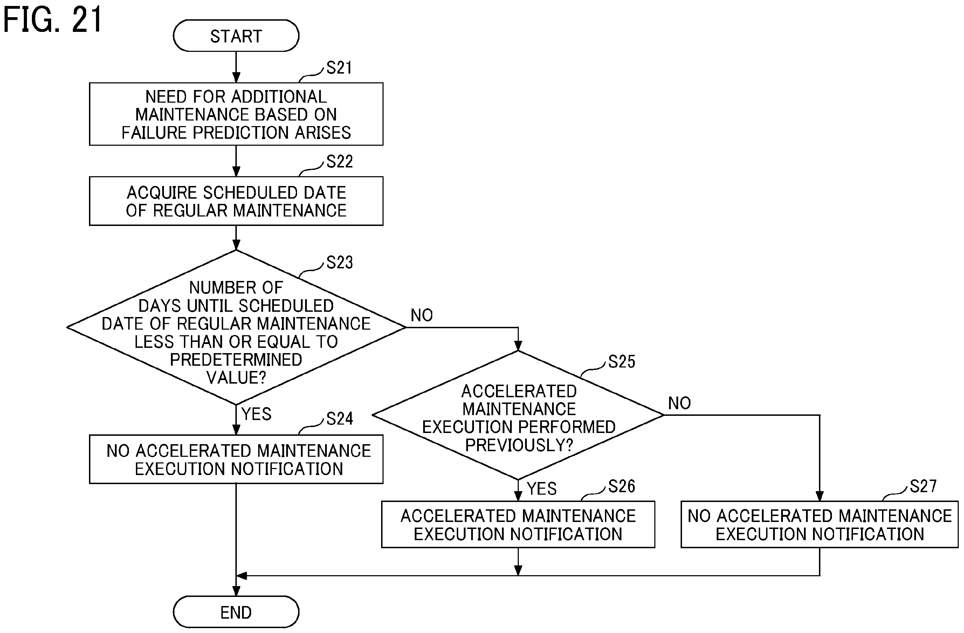

FIG. 21 is a flowchart illustrating a process for changing whether to recommend an accelerated execution of maintenance, based on whether the user has performed maintenance for which an accelerated execution was recommended.

The processing of steps S21 to S24 may be similar to that of steps S1 to S4 in FIG. 15.

When the determination result in step S23 is No, the determination unit 45 accesses the notification history information storage unit 4002 and determines, from the previous notification history information, whether the user has performed an accelerated execution of maintenance (S25). This determination is performed on a notification record associated with the same target module as the target module for an additional maintenance for which the accelerated execution of regular maintenance is determined to be recommended.

When the determination result in step S25 is Yes, it is expected that the execution of the currently scheduled maintenance will also be accelerated. Thus, the determination unit 45 determines to recommend the accelerated execution of the regular maintenance (S26). The determination unit 45 stores, in the notification history information storage unit 4002, the additional maintenance for which the accelerated execution of the regular maintenance is determined to be recommended. In the notification history information storage unit 4002, the item "notification status" is set to "in progress", and the item "execution or non-execution" is set to "yet to be execution."

When the determination result in step S25 is No, it is not expected that the execution of the currently scheduled maintenance will also be accelerated. Thus, the determination unit 45 determines not to recommend an accelerated execution of the regular maintenance (S27). The determination unit 45 stores, in the notification history information storage unit 4002, the additional maintenance for which the accelerated execution of the regular maintenance is determined to be recommended. In addition, the determination unit 45 sets the item "notification status" to "deleted" and sets the item "execution or non-execution" to "yet to be execution."

In step S25, the determination unit 45 may determine whether the percentage of executions for notification records associated with the same target module as the target module for an additional maintenance for which an accelerated execution of regular maintenance is determined to be recommended is greater than or equal to a threshold in the notification history information storage unit 4002.

### Example of Maintenance Schedule Displayed after Execution of Maintenance

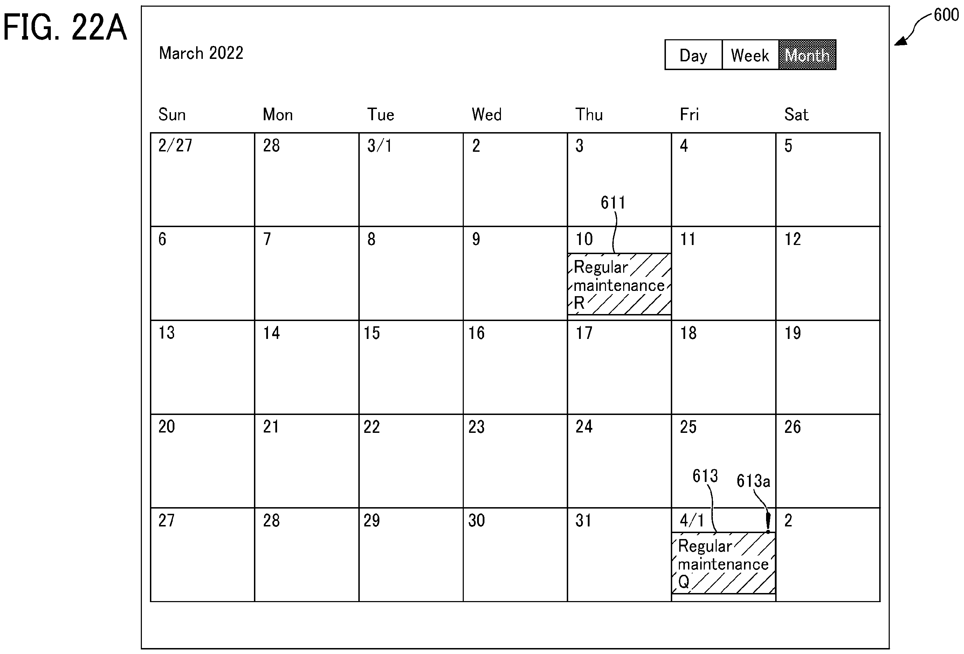

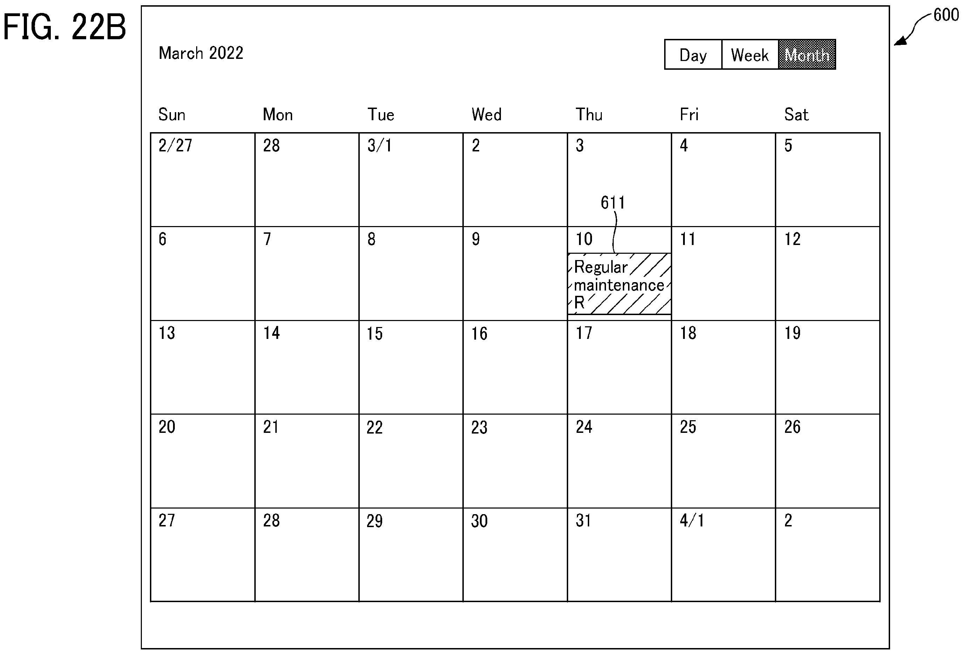

FIGs. 22A and 22B illustrate an example of maintenance schedule screens displayed before and after an execution of maintenance. The maintenance schedule screen illustrated in FIG. 22A is the same as the maintenance schedule screen illustrated in FIG. 13. In FIG. 22A, it is assumed that the regular maintenance 613 is assumed to be regular maintenance for which an accelerated execution is determined to be recommended for additional maintenance.

The user has performed an accelerated execution of the regular maintenance 613.

FIG. 22B illustrates an example of a maintenance schedule displayed after the user has performed the accelerated execution of the regular maintenance 613. Since the accelerated execution of the regular maintenance 613 is completed, the schedule of the regular maintenance 613 is deleted.

### Overall Operation or Processing

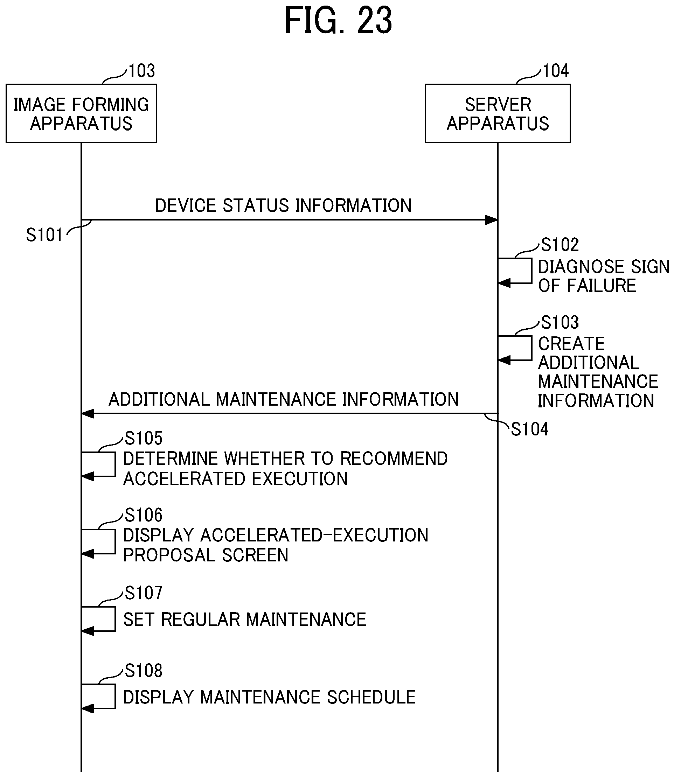

A process performed by the image forming apparatus 103 and the server apparatus 104 will be described below with reference to FIG. 23. FIG. 23 is a sequence diagram illustrating a process in which the image forming apparatus 103 and the server apparatus 104 communicate with each other and the image forming apparatus 103 displays the accelerated execution proposal screen 700 and the maintenance schedule screen 600.

S101: The communication unit 41 of the image forming apparatus 103 transmits the device status information to the server apparatus 104 at a specified date or time in a specified period of time such as a day or a week. The communication unit 41 may irregularly transmit the device status information to the server apparatus 104.

The communication unit 11 of the server apparatus 104 receives the device status information and stores the device status information in the device status information storage unit 1001.

S102: The maintenance determination unit 12 diagnoses the presence or absence of a sign of failure at the time when the device status information is received or at a specified date or time in a week or a day, for example. The following description will be given on the assumption that a sign of failure has been detected. The maintenance determination unit 12 refers to the failure maintenance information storage unit 1005 and determines the content of additional maintenance corresponding to the type of the failure and a maintenance deadline.

S103: The maintenance determination unit 12 creates additional maintenance information based on the failure maintenance information.

S104: The communication unit 11 of the server apparatus 104 transmits the additional maintenance information (the maintenance name, the date of diagnosis, the recommended start date, the target module, etc.) to the image forming apparatus 103. The communication unit 41 of the image forming apparatus 103 receives the additional maintenance information and stores the additional maintenance information in the maintenance information storage unit 4001.

S105: The determination unit 45 determines whether to recommend an accelerated execution of regular maintenance, based on the additional maintenance information transmitted in step S104.

S106: If the determination unit 45 determines to recommend an accelerated execution of regular maintenance, the display control unit 42 causes the display 440 to display the accelerated execution proposal screen 700.

S107: The regular maintenance generation unit 44 of the image forming apparatus 103 determines whether to generate a regular maintenance schedule on a specified date or time in a week or a day, for example. The regular maintenance generation unit 44 generates regular maintenance information (a maintenance name, a date of diagnosis, a scheduled date, a target module, etc.), if any, and stores the regular maintenance information in the maintenance information storage unit 4001. In response to pressing of a "Execute task" button, the "Execute Maintenance" button 705 or the "Ask Customer Engineer To Do Work" button 706 on the accelerated execution proposal screen 700, a process for automatically rescheduling the regular maintenance is performed. Specifically, the date of execution (scheduled date) of the regular maintenance is put forward in accordance with the date of execution (scheduled date) of additional maintenance that is added. For example, the regular maintenance is set simultaneously with the additional maintenance, the regular maintenance and the additional maintenance are combined together, the additional maintenance is replaced with the regular maintenance, or the schedule of the regular maintenance is canceled. A schedule of regular maintenance may be expedited such that the execution of a specific schedule of regular maintenance or all the set schedules of regular maintenance may be accelerated. In one embodiment, the user selects and sets whether to accelerate the execution of a specific schedule or all the set schedules.

S108: The display control unit 42 of the image forming apparatus 103 displays the maintenance schedule at a predetermined time. A typical example of the predetermined time is a time when the user inputs an operation for displaying the maintenance schedule. In another example, the display control unit 42 may display the maintenance schedule automatically in response to registration of new regular maintenance information or additional maintenance information.

As described above, the maintenance management system 100 provides a recommendation for an accelerated execution of pre-scheduled regular maintenance.

If additional maintenance is added, the regular maintenance for which an accelerated execution is recommended is performed, thereby making the additional maintenance complete. Accordingly, the additional maintenance is not additionally execution. As a result, the production of printed materials is less likely to be interfered with. For example, when the deadline for printed materials is approaching and the user wishes to continue printing of the printed materials without stopping the device, the additional maintenance is not additionally executed. Thus, for example, the schedule for the production of printed materials is adjusted to perform the regular maintenance for which an accelerated execution is recommended.

### Supplemental Description of Devices Other than Image Forming Apparatus

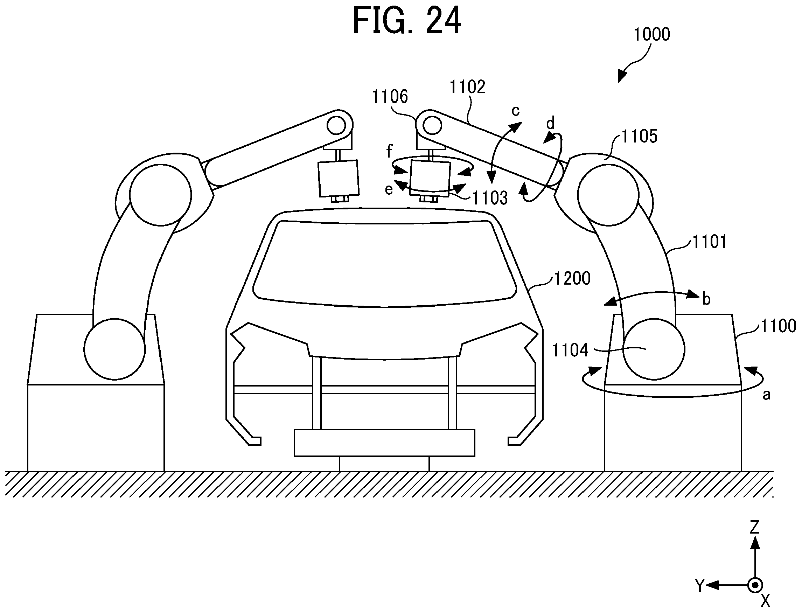

The configuration of some devices will further be described with reference to FIGs. 24 to 26.

The following describes the devices, namely, a liquid discharge apparatus for painting, for example, an automobile and a 3D printer.

### Liquid Discharge Apparatus

FIG. 24 is a schematic entire view of a liquid discharge apparatus. The liquid discharge apparatus illustrated in FIG. 24 is a painting robot for painting, for example, the body of an automobile. An X-axis direction, a Y-axis direction, and a Z-axis direction are indicated by arrows in FIG. 24. The X-axis direction, the Y-axis direction, and the Z-axis direction are three intersecting directions. The X-axis direction is, for example, a front-back direction of the body of the automobile, which is an object to be painted. The Y-axis direction is a width direction of the body of the automobile. The Z-axis direction is the up-down direction in FIG. 24.

As illustrated in FIG. 24, a painting robot 1000 is installed so as to face an object 1200 such as a surface of the body of an automobile. The painting robot 1000 includes a base 1100, a first arm 1101, a second arm 1102, and a head unit 1103. The first arm 1101 is coupled to the base 1100. The second arm 1102 is coupled to the first arm 1101. The head unit 1103 is coupled to the second arm 1102.

The painting robot 1000 further includes a first joint 1104, a second joint 1105, and a third joint 1106. The first joint 1104 couples the base 1100 and the first arm 1101. The second joint 1105 couples the first arm 1101 and the second arm 1102. The third joint 1106 couples the second arm 1102 and the head unit 1103.

The painting robot 1000 is, for example, a multi-articulated robot. The base 1100 is rotatable in a direction indicated by an arrow "a" about a rotation axis extending in the Z-axis direction. The base 1100 supports one end of the first arm 1101 through the first joint 1104.

The first arm 1101 is swingable in a direction indicated by an arrow "b" about a rotation axis parallel to an X-Y plane. The other end of the first arm 1101 supports one end of the second arm 1102 through the second joint 1105. The second arm 1102 is swingable in a direction indicated by an arrow "c" about a rotation axis parallel to the X-Y plane. The second arm 1102 is further rotatable in a direction indicated by an arrow "d" about a rotation axis extending in a longitudinal direction of the second arm 1102.

The other end of the second arm 1102 supports the head unit 1103 through the third joint 1106. The head unit 1103 is swingable in a direction indicated by an arrow "e" about a rotation axis extending in a direction intersecting the longitudinal direction of the second arm 1102. The head unit 1103 is further rotatable in a direction indicated by an arrow "f" about a rotation axis extending in a direction in which the head unit 1103 and the third joint 1106 are separated from each other.

The painting robot 1000 is configured to freely move the head unit 1103 with respect to the object 1200. The painting robot 1000 is configured to accurately position the head unit 1103 with respect to the object 1200. The painting robot 1000 is configured to accurately set the head unit 1103 in position to paint the object 1200. The painting robot 1000 discharges paint toward the object 1200 to coat the object 1200 with the paint.

The present embodiment illustrates a system configuration in which the painting robot 1000 is disposed on each side of the object 1200 such that two painting robots 1000 are arranged with the object 1200 therebetween, by way of example but not by way of limitation. One or three or more painting robots 1000 may be disposed for the object 1200.

### 3D Printer

A 3D printer is a device that enables a user to produce a three-dimensional object based on three-dimensional shape data. The 3D printer is also referred to as a multi-layer fabrication apparatus, an additive manufacturing (AM) apparatus, or an AM machine. The 3D printer may also be referred to as a "three-dimensional printing machine". A fabrication method by the 3D printer typically includes, for example, an inkjet method, a fused deposition modeling (FDM) method, and a powder adhering method. Any other suitable fabrication methods may be used. In the inkjet method, a liquid resin is applied and then irradiated with, for example, ultraviolet light to harden the liquid resin little by little. In the FDM method, resin that is melted by heat is gradually piled up. In the powder adhering method, adhesive is sprayed onto powdered resin. The following describes a 3D printer based on the FDM technique, as an example.

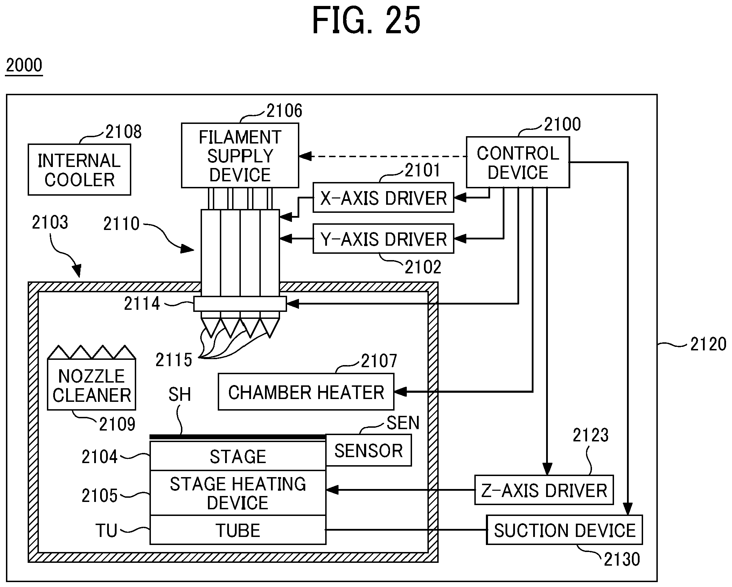

FIG. 25 is a schematic diagram illustrating an example hardware configuration of a 3D printer 2000. For example, as illustrated in FIG. 25, the 3D printer 2000 has a frame 2120 including a chamber 2103. The chamber 2103 has an interior, and the interior of the chamber 2103 serves as a processing space for fabricating a three-dimensional object. The processing space, or the interior of in the chamber 2103, is provided with a stage 2104 serving as a placement table. In the illustrated example, a fabricated object is produced on the stage 2104.

The interior of the chamber 2103 is further provided with a fabrication head 2110 above the stage 2104. The fabrication head 2110 serves as a fabrication means. The fabrication head 2110 has at the bottom thereof discharge nozzles 2115 to discharge filaments. In the present embodiment, four discharge nozzles 2115 are disposed on the fabrication head 2110. Any number of discharge nozzles 2115 may be disposed. The fabrication head 2110 further includes a head heating device 2114 to heat the filaments to be supplied to the discharge nozzles 2115. As described above, the 3D printer uses the filaments held in advance to produce a fabricated object.

The temperature inside the frame 2120 is adjusted by an internal cooler 2108.

Each filament is, for example, a material such as acrylonitrile butadiene styrene (ABS) resin or polylactic acid (PLA) resin.

Further, the filaments are thermoplastic. Accordingly, the filaments are heated to high temperature when discharged from the 3D printer. After being discharged, the filaments are cooled by, for example, air cooling and are then cured. Using such a property, the 3D printer discharges the filaments to produce a fabricated object.

Each filament has, for example, an elongated wires shape. The filaments are set in the 3D printer 2000 as being wound, for example. The filaments are supplied to the discharge nozzles 2115 on the fabrication head 2110 by a filament supply device 2106.

The fabrication head 2110 is driven by an X-axis driver 2101 to move in the X-axis direction. The X-axis driver 2101 includes, for example, an actuator, a mechanism, a power supply, and an electronic circuit.

The fabrication head 2110 is also driven by a Y-axis driver 2102 to move in the Y-axis direction. The Y-axis driver 2102 includes, for example, an actuator, a mechanism, a power supply, and an electronic circuit. Further, the fabrication head 2110 is driven by a Z-axis driver 2123 to move in the Z-axis direction.

The Z-axis driver 2123 includes, for example, an actuator, a mechanism, a power supply, and an electronic circuit.

In the illustrated example, a control device 2100 instructs the X-axis driver 2101, the Y-axis driver 2102, and the Z-axis driver 2123 to move the stage 2104 to a position. In response to the instruction from the control device 2100, the X-axis driver 2101, the Y-axis driver 2102, and the Z-axis driver 2123 move the stage 2104 to the specified position. The control device 2100 controls the devices.

As illustrated in FIG. 25, preferably, the 3D printer 2000 further includes a stage heating device 2105 to heat the stage 2104 and the fabricated object on the stage 2104. The stage heating device 2105 is, for example, a heater.

The interior of the chamber 2103 (i.e., the processing space) is provided with a chamber heater 2107 serving as a heating means to heat the interior of the chamber 2103. Preferably, the 3D printer 2000 performs production with the temperature of the interior of the chamber 2103 maintained at a target temperature by the chamber heater 2107.

The filaments to be discharged from the discharge nozzles 2115 may be of the same or different types. In the present embodiment, furthermore, in the 3D printer 2000, the filaments supplied by the filament supply device 2106 are heated and melted by the head heating device 2114.

In the 3D printer 2000, subsequently, after reaching a molten state, the filaments are extruded and discharged from the discharge nozzles 2115. In the 3D printer 2000, the filaments are discharged and deposited in layers on the stage 2104 to produce a fabricated obj ect.

The 3D printer 2000 may use a support material. In other words, the support material may be supplied to the discharge nozzles 2115. The support material may be made of a material different from the material of the filaments. The support material is removed from the fabricated object formed by the filaments after the fabricated object is produced. For example, the support material is first heated and melted by the head heating device 2114 in a manner similar to that for the filaments. Subsequently, after reaching a molten state, the support material is extruded and discharged from the discharge nozzles 2115 and is deposited in layers in a manner similar to that for the filaments.

Further, as illustrated in FIG. 25, the 3D printer 2000 preferably has a configuration in which a sheet SH placed on the stage 2104 can be sucked. For example, as illustrated in FIG. 25, a tube TU and a suction device 2130 suck the sheet SH in accordance with a state detected by a sensor SEN.

Preferably, as illustrated in FIG. 25, the 3D printer 2000 further includes a nozzle cleaner 2109. The nozzle cleaner 2109 cleans the discharge nozzles 2115 so that, for example, impurities are not mixed with the filaments to be discharged.

Accordingly, the 3D printer 2000 performs a preheating process to raise the temperature of the interior of the chamber 2103 to a target temperature in advance before starting production. For example, during the preheating process, the chamber heater 2107 heats the interior of the chamber 2103 to raise the temperature of the interior of the chamber 2103 to around the target temperature. During production, in contrast, the chamber heater 2107 heats the interior of the chamber 2103 to maintain the temperature of the interior of the chamber 2103 at or near the target temperature. The operation of the chamber heater 2107 is controlled by the control device 2100.

The hardware configuration of the 3D printer 2000 is not limited to that illustrated in FIG. 25. In an example hardware configuration, the 3D printer 2000 may include, for example, multiple control devices 2100. In another example hardware configuration, for example, the suction device 2130 may be omitted from the 3D printer 2000.

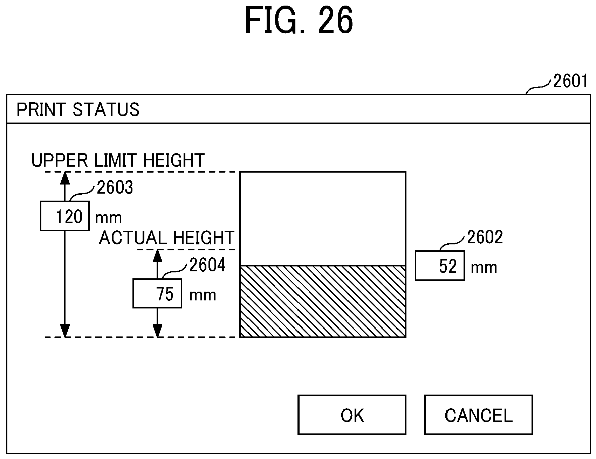

FIG. 26 illustrates a progress status screen 2601 displayed on a display that the control device 2100 includes. The progress status screen 2601 illustrated in FIG. 26 presents upper limit height information Mh (indicated by reference numeral 2603) and an actual height hx (indicated by reference numeral 2604).

A user can compare the actual height hx of a 3D model with the current height H of the fabrication object to recognize the progress of printing. In a case where the orientation of a 3D model displayed by a 3D application and the orientation of a 3D model disposed in a virtual space of the 3D printer 2000 change, the user does not have to recognize the actual height hx of the 3D model.

### Applied Cases

While the present disclosure has been described using some embodiments, the embodiments do not limit the present disclosure in any way. Various modifications and replacements may be made without departing from the scope of the present disclosure.

For example, in a case where a schedule for printing of printed materials is registered in a calendar, the maintenance determination unit 12 may set the recommended start date in the additional maintenance information described in the present embodiment to a date and time when no schedule for printing is set.

In the present embodiment, furthermore, the image forming apparatus 103 determines whether to recommend an accelerated execution of regular maintenance. In another embodiment, the server apparatus 104 may determine whether to recommend an accelerated execution of regular maintenance. In this case, the image forming apparatus 103 transmits the regular maintenance information to the server apparatus 104. If the server apparatus 104 determines to recommend an accelerated execution of regular maintenance, the server apparatus 104 transmits screen information of the accelerated execution proposal screen 700 for the regular maintenance to the image forming apparatus 103 or the terminal apparatus 101.

Likewise, the server apparatus 104 may determine whether to update the item "notification status" of additional maintenance for which an accelerated execution of regular maintenance is determined by the determination unit 45 to be recommended to "deleted" in the notification history information storage unit 4002.

In another embodiment, if the server apparatus 104 determines to recommend an accelerated execution of regular maintenance, the server apparatus 104 may display the accelerated execution proposal screen 700 for the regular maintenance.

In the present embodiment, the image forming apparatus 103 executes a native application and displays a maintenance schedule, by way of example but not by way of limitation. In another example, the image forming apparatus 103 uses a general-purpose web browser to display a maintenance schedule. In this case, the server apparatus 104 creates a screen of the maintenance schedule.

The examples of configuration illustrated in, for example, FIG. 7 are divided according to main functions in order to facilitate understanding of processing by the server apparatus 104 and the image forming apparatus 103. No limitation is intended by how the processes are divided into units or by the name of the units. The processing of the server apparatus 104 and the image forming apparatus 103 may be divided into more units of processing in accordance with the content of the processing. Further, the division may be made such that each unit of processing includes more processing operations.

The apparatuses or devices described in one or more embodiments are just one example of plural computing environments that implement the one or more embodiments disclosed herein. In some embodiments, the DFE 102 includes multiple computing devices such as server clusters. The multiple computing devices are configured to communicate with one another through any type of communication link including, for example, a network and a shared memory, and perform the processes disclosed herein.

Further, the server apparatus 104 may be configured to share the disclosed processing steps, for example, the process illustrated in FIG. 23, in various combinations. For example, a process executed by a predetermined unit may be executed by a plurality of information processing devices included in the server apparatus 104. Further, the server apparatus 104 may be implemented as one server apparatus or may be divided into a plurality of apparatuses.

Each of the functions in the embodiments described above may be implemented by one or more processing circuits or circuitry. The term "processing circuit" or "processing circuitry", as used herein, includes a processor programmed to implement each function by software, such as a processor implemented by an electronic circuit, and devices designed to implement the functions described above, such as an application specific integrated circuit (ASIC), a digital signal processor (DSP), a field programmable gate array (FPGA), and existing circuit modules.

### Aspect 1

In Aspect 1, an information processing system determines a maintenance schedule for first maintenance and a maintenance schedule for second maintenance that is different from the first maintenance and that is to be executed additionally.

The information processing system includes a display control unit. The display control unit controls display means to display, in response to determination of a maintenance schedule for the second maintenance, information related to accelerated execution of the maintenance schedule for the first maintenance, based on the maintenance schedule for the second maintenance.

### Aspect 2

According to Aspect 2, in the information processing system of Aspect 1, the maintenance schedule for the first maintenance specifies a target module to be subjected to the first maintenance, and
the display control unit controls the display means to display the information related to accelerated execution of the maintenance schedule for the first maintenance in a case where the target module to be subjected to the first maintenance is identical to a target module to be subjected to the second maintenance.

### Aspect 3

According to Aspect 3, in the information processing system of Aspect 1 or Aspect 2, the display control unit controls the display means not to display the information related to accelerated execution of the maintenance schedule for the first maintenance in a case where a period of time until a scheduled date of execution of the first maintenance is less than or equal to a predetermined number of days, the scheduled date of execution of the first maintenance being specified based on the second maintenance.

### Aspect 4

According to Aspect 4, in the information processing system of any one of Aspects 1 to 3, in response to hiding of the information related to accelerated execution of the maintenance schedule for the first maintenance without execution of the first maintenance,
the display control unit controls the display means to display a notification on a predetermined screen, the notification indicating that the information related to accelerated execution of the maintenance schedule for the first maintenance remains undeleted, and
the display control unit cancels display of the notification on the predetermined screen in response to a period of time until a scheduled date of execution of the first maintenance being less than or equal to a predetermined number of days, the scheduled date of execution of the first maintenance being specified based on the second maintenance.

### Aspect 5

According to Aspect 5, in the information processing system of any one of Aspects 1 to 3, the display control unit controls the display means to repeatedly, at a predetermined time, display information related to accelerated execution of the first maintenance and specified based on the second maintenance, and
the display control unit stops display of the information related to accelerated execution of the first maintenance and specified based on the second maintenance, in response to a period of time until a scheduled date of execution of the first maintenance being less than or equal to a predetermined number of days, the scheduled date of execution of the first maintenance being specified based on the second maintenance.

### Aspect 6

According to Aspect 6, the information processing system of any one of Aspects 1 to 5 further includes a notification history information storage unit. In the notification history information storage unit, execution or non-execution is set for the accelerated execution of the maintenance schedule for the first maintenance in association with the second maintenance that is determined to be executed additionally, the execution or non-execution being specified based on the second maintenance.

The display control unit changes whether to display information related to accelerated execution of the first maintenance and specified based on the second maintenance, based on the execution or non-execution set in the notification history information storage unit for the accelerated execution of the maintenance schedule for the first maintenance for which information related to an accelerated execution has been previously displayed.

### Aspect 7

According to Aspect 7, in the information processing system of Aspect 6, the display control unit controls the display means to display information related to accelerated execution of the first maintenance and specified based on the second maintenance, in a case where the notification history information storage unit indicates that accelerated execution of the second maintenance to be performed on a target module identical to a target module to be subjected to the second maintenance that is determined to be executed additionally has been performed.

### Aspect 8

According to Aspect 8, in the information processing system of Aspect 6, the display control unit changes whether to display information related to accelerated execution of the first maintenance and specified based on the second maintenance, based on a percentage of executions of the first maintenance for which information related to accelerated execution has been previously displayed, the percentage being set in the notification history information storage unit.

### Aspect 9

According to Aspect 9, in the information processing system of any one of Aspects 1 to 8, the first maintenance includes regular maintenance that is set based on a counter value of a device.

### Aspect 10

According to Aspect 10, in the information processing system of Aspect 1, the second maintenance includes additional maintenance for handling a failure in a device in response to detection of a sign of the failure, the detection of the sign being performed using a failure prediction model in response to device status information of the device being input to the failure prediction model.

### Aspect 11

According to Aspect 11, in the information processing system of Aspect 1, the information related to accelerated execution of the maintenance schedule for the first maintenance includes information for recommending the accelerated execution of the maintenance schedule for the first maintenance.

### Aspect 12

According to Aspect 12, in the information processing system of Aspect 1, the information related to accelerated execution of the maintenance schedule for the first maintenance includes information indicating that the maintenance schedule for the first maintenance is executable in an accelerated way.

### Aspect 13

According to Aspect 13, in the information processing system of Aspect 1, the first maintenance includes maintenance to be executed periodically.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing system for determining a maintenance schedule for first maintenance and a maintenance schedule for second maintenance, the second maintenance being different from the first maintenance and being to be executed additionally, the information processing system comprising:
a display control unit (42) configured to control display means to display, in response to determination of a maintenance schedule for the second maintenance, information related to accelerated execution of the maintenance schedule for the first maintenance, based on the maintenance schedule for the second maintenance.

2. The information processing system according to claim 1, wherein
the maintenance schedule for the first maintenance specifies a target module to be subjected to the first maintenance, and
the display control unit (42) is configured to control the display means to display the information related to accelerated execution of the maintenance schedule for the first maintenance in a case where the target module to be subjected to the first maintenance is identical to a target module to be subjected to the second maintenance.

3. The information processing system according to claim 1 or 2, wherein
the display control unit (42) is configured to control the display means not to display the information related to accelerated execution of the maintenance schedule for the first maintenance in a case where a period of time until a scheduled date of execution of the first maintenance is less than or equal to a predetermined number of days, the scheduled date of execution of the first maintenance being specified based on the second maintenance.

4. The information processing system according to any one of claims 1 to 3,
wherein
the display control unit (42) is configured to:
in response to hiding of the information related to accelerated execution of the maintenance schedule for the first maintenance without execution of the first maintenance, control the display means to display a notification on a screen, the notification indicating that the information related to accelerated execution of the maintenance schedule for the first maintenance remains undeleted, and
cancel display of the notification on the screen in response to a period of time from a current time until a scheduled date of execution of the first maintenance being less than or equal to a predetermined number of days, the scheduled date of execution of the first maintenance being specified based on the second maintenance.

5. The information processing system according to any one of claims 1 to 3,
wherein
the display control unit (42) is configured to:
control the display means to repeatedly, at a predetermined time, display information related to accelerated execution of the first maintenance and specified based on the second maintenance; and
stop display of the information related to accelerated execution of the first maintenance and specified based on the second maintenance, in response to a period of time until a scheduled date of execution of the first maintenance being less than or equal to a predetermined number of days, the scheduled date of execution of the first maintenance being specified based on the second maintenance.

6. The information processing system according to any one of claims 1 to 5, further comprising a notification history information storage unit (4002) in which execution or non-execution is set for the accelerated execution of the maintenance schedule for the first maintenance in association with the second maintenance that is determined to be executed additionally, the execution or non-execution being specified based on the second maintenance, wherein
the display control unit (42) is configured to change whether to display information related to accelerated execution of the first maintenance and specified based on the second maintenance, based on the execution or non-execution set in the notification history information storage unit (4002) for the accelerated execution of the maintenance schedule for the first maintenance for which information related to accelerated execution has been previously displayed.

7. The information processing system according to claim 6, wherein
the display control unit (42) is configured to control the display means to display information related to accelerated execution of the first maintenance and specified based on the second maintenance, in a case where the notification history information storage unit (4002) indicates that accelerated execution of the second maintenance to be performed on a target module identical to a target module to be subjected to the second maintenance that is determined to be executed additionally has been performed.

8. The information processing system according to claim 6, wherein
the display control unit (42) is configured to change whether to display information related to accelerated execution of the first maintenance and specified based on the second maintenance, based on a percentage of executions of the first maintenance for which information related to accelerated execution has been previously displayed, the percentage being set in the notification history information storage unit (4002).

9. The information processing system according to any one of claims 1 to 8,
wherein
the first maintenance includes regular maintenance that is set based on a counter value of a device.

10. The information processing system according to claim 1, wherein
the second maintenance includes additional maintenance for handling a failure in a device in response to detection of a sign of the failure, the detection of the sign being performed using a failure prediction model in response to device status information of the device being input to the failure prediction model.

11. The information processing system according to claim 1, wherein
the information related to accelerated execution of the maintenance schedule for the first maintenance includes information for recommending the accelerated execution of the maintenance schedule for the first maintenance.

12. The information processing system according to claim 1, wherein
the information related to accelerated execution of the maintenance schedule for the first maintenance includes information indicating that the maintenance schedule for the first maintenance is executable in an accelerated way.

13. The information processing system according to claim 1, wherein
the first maintenance includes maintenance to be executed periodically.

14. A maintenance schedule display control method for determining a maintenance schedule for first maintenance and a maintenance schedule for second maintenance, the second maintenance being different from the first maintenance and being to be executed additionally, the maintenance schedule display control method comprising:
controlling (S106) display means to display, in response to determination of a maintenance schedule for the second maintenance, information related to accelerated execution of the maintenance schedule for the first maintenance, based on the maintenance schedule for the second maintenance.

15. A maintenance management system for determining a maintenance schedule for first maintenance and a maintenance schedule for second maintenance, the second maintenance being different from the first maintenance and being to be executed additionally, the maintenance management system comprising:
a display control unit (42) configured to control display means to display, in response to determination of a maintenance schedule for the second maintenance, information related to accelerated execution of the maintenance schedule for the first maintenance, based on the maintenance schedule for the second maintenance.

16. An information processing system for determining a maintenance schedule for first maintenance and a maintenance schedule for second maintenance having a lower priority of execution than the first maintenance, the information processing system comprising:
a communication unit (11) configured to, in response to determination of a maintenance schedule for the second maintenance, transmit information related to accelerated execution of the maintenance schedule for the first maintenance to a device, based on the maintenance schedule for the second maintenance, wherein
the device displays, on display means, the information related to accelerated execution of the maintenance schedule for the first maintenance.

17. Carrier means carrying computer readable codes which, when executed by an information processing apparatus for determining a maintenance schedule for first maintenance and a maintenance schedule for second maintenance, the second maintenance being different from the first maintenance and being to be executed additionally, cause the information processing apparatus to carry out the maintenance schedule display control method of claim 14.
